# EUROPÄISCHE PATENTANMELDUNG

(11) **EP 2 840 074 A1**
(43) Veröffentlichungstag der Anmeldung: **25.02.2015**
(21) Anmeldenummer: 13004163.5
(22) Anmeldetag: 23.08.2013
(51) Int. Cl.: C05D 9/00, A01C 1/06, C05G 3/00, C05G 3/04

(54) **Zubereitung zur Förderung des Pflanzenanbaus, deren Verwendung und Herstellungsverfahren**

(71) Anmelder: Biotensidon GmbH, 76185 Karlsruhe (DE)
(72) Erfinder: Jülich, Wolf-Dieter, 17489 Greifswald (DE); Schauer, Frieder, 17509 Lubmin (DE); Shulga, Oleksandr, 79005 Lviv (UA); Schmidt, Dieter, 17489 Greifswald (DE); Schlüter, Rabea, 17493 Greifswald (DE); Karpenko, Olena, 79005 Lviv (UA); Shchehlova, Nataliia, 79031 Lviv (UA); Vildanova, Roza, 81500 Gorodok (UA); Lindequist, Ulrike, 17489 Greifswald (DE)
(74) Vertreter: Drobnik, Stefanie

(57) **Zusammenfassung**

Die vorliegende Erfindung betrifft eine Zubereitung zur Förderung des Pflanzenanbaus, umfassend zumindest ein Mixed-Layer-Tonmineral und zumindest ein Zeolithmineral. Ferner weist die Zubereitung zumindest ein Biotensid auf, das mit dem zumindest einen Mixed-Layer-Tonmineral und dem zumindest einen Zeolithmineral einen Geopolymer-Biotensid-Komplex bildet, der eine Netzwerk-Struktur aufweist, die durch das Zeolithmineral gebildet wird, das in einem Hydrogel des Mixed-Layer-Tonminerals dispergiert ist, wobei das zumindest eine Biotensid in die Netzwerk-Struktur eingelagert ist. Ferner offenbart die Erfindung ein Verfahren zum Herstellen der Zubereitung, sowie deren Verwendung und Verfahren zur Weiterverarbeitung der Zubereitung in vorteilhafte Applikationsformen.

## Beschreibung

Die Erfindung betrifft eine Zubereitung zur Förderung des Pflanzenanbaus und die Verwendung der Zubereitung. Ferner betrifft die Erfindung Verfahren zur Herstellung der Zubereitung und zur Weiterverarbeitung der Zubereitung zu Applikationsformen der Zubereitung.

Um optimale Erträge im Pflanzenanbau zu erzielen oder auch um strapazierfähige Rasenflächen zu erhalten, werden Pflanzenschutzmittel, Pflanzenstärkungsmittel und weitere Pflanzenwuchsstoffe zur Vermeidung von Schäden und Leistungsminderungen von Nutzpflanzen sowie Bodenverbesserer eingesetzt, durch die eine Bodengare erreicht werden soll. Ein garer Boden ist krümelig, humos, gut durchlüftet, ausreichend feucht und leicht durchwurzelbar, d. h. er enthält Bodenporen kleiner und mittlerer Größe, die der Luftführung und Wasserspeicherung dienen. Eine solche Krümelstruktur des Bodens ermöglicht aufgrund der guten Luftzu- und -abfuhr eine arten- und individuenreiche Besiedelung des Bodens mit Organismen wie Bakterien, Würmern, Insekten und anderen Klein- und Kleinstlebewesen, die das Mikroklima des Bodens beeinflussen. Unterstützt wird die Bodengare durch Dauerhumus, ausreichende Lockerung sowie Zufuhr von organischem Dünger wie Kompost oder Gründüngung.

Der in Phosphatdüngemitteln eingesetzte Phosphor ist ein Hauptnährstoff der Pflanzen und ist in seiner physiologischen Funktion durch keinen anderen Stoff zu ersetzen. Derzeit werden Phosphatdungemittel industriell nahezu ausschließlich aus Phosphaten mineralischen Ursprungs hergestellt. Diese werden hauptsächlich in Afrika und Asien aus sedimentären und magmatischen Lagerstätten gewonnen. Es zeichnet sich ab, dass diese Vorräte weltweit knapper werden. Außerdem führen abnehmende Qualität der noch verfügbaren Vorräte beispielsweise durch höhere Schwermetallgehalte in den Lagerstätten und zunehmend erschwerte Abbaubedingungen zu höheren Rohstoffpreisen.

Es ist bekannt, Tiermehl, das einen hohen Phosphatgehalt aufweist, zu verbrennen und aus der Asche ein phosphathaltiges Düngemittel herzustellen. In EP 166 18 75 A1 wird ein Verfahren zur Gewinnung eines phosphorhaltigen Düngemittels aus Tiermehl beschrieben. Dabei wird das Tiermehl mit Alkali- und/oder Erdalkali- und/oder Quarzverbindungen vermischt und diese Materialmischung anschließend bei einer Temperatur von mindestens 800 °C verbrannt. Die Alkali-, Erdalkali- und/oder Quarzverbindungen sorgen für eine gute Pflanzenverfügbarkeit der im Verbrennungsprodukt enthaltenen Phosphorverbindungen. Nachteilig ist allerdings der hohe Aufwand zur Gewinnung der Düngerkomponenten und ferner wird der Anteil an hochwertigem pflanzenverfügbaren Stickstoff nicht genutzt.

Pflanzenverrfügbare Stickstoffverbindungen sind unter natürlichen Bedingungen meist knapp und limitierend für das Wachstum der angebauten Pflanzen. Im ökologischen Landbau wird angestrebt, die notwendige Nährstoffversorgung mit umweltverträglichen Verfahren zu erreichen. So wird zur Verbesserung der Stickstoffversorgung der Zwischenfruchtanbau von Leguminosen eingesetzt. Durch die intensive Durchwurzelung und Bedeckung des Bodens werden Erosionsschäden wirksam verringert. Zudem wirkt sich der Zwischenfruchtanbau günstig auf die Erhöhung der Artenvielfalt in und auf dem Boden aus. Beim Zwischenfruchtanbau wird die Wurzel- und Blattmasse in den Boden eingearbeitet und dort biologisch zersetzt, wobei organisches Material unter Einfluss von Luftsauerstoff von Bakterien und Pilzen abgebaut wird und wasserlösliche und damit auswaschungsgefährdete Mineralstoffe freigesetzt werden, wie beispielsweise Nitrate, Ammoniumsalze, Phosphate und Kalium- und Magnesiumverbindungen. Ein Teil der bei diesem Abbau entstehenden Zwischenprodukte wird zu Humus umgewandelt.

Die Biomassezersetzung zu Kompost wird durch Rhamnolipidbiotenside aus *Pseudomonas* sp. Gefördert, wie von F. Dai et al. am Beispiel von Reisstroh und Weizenkleie gezeigt werden konnte ("Application of biosurfactant in composting of agricultural waste", Huan Jing Ke Xue, 2005, Bd. 26, N 4, S. 181-185).

Langfristig ist durch erhöhte Biomassenzufuhr eine höhere Bodenfruchtbarkeit, ein stabileres Bodengefüge, eine höhere Tragfähigkeit des Bodens, sowie vermehrtes Wasserspeichervermögen erreichbar. Allerdings besteht hierbei das Risiko der Auswaschung von pflanzenverfügbarem Stickstoff sowie von anderen auswaschungsgefährdeten Nährstoffen (z.B. Kalium, Magnesium) über die Wintermonate.

Da die meisten Pflanzen und viele Mikroorganismen nur anorganischen Stickstoff assimilieren können, kommt den Knöllchenbakterien (Rhizobien) eine große Bedeutung zu, die die Fähigkeit haben, elementaren molekularen Stickstoff zu binden, indem sie ihn zu Ammoniak bzw. Ammonium reduzieren und damit biologisch verfügbar machen. Pflanzen wie Soja (*Glycine sp*.), Erbse (*Pisum sp*.), Linse (*Lens sp*.), Kichererbse (*Cicer sp*.), Bohne (*Phaseolus sp*.), Ackerbohne (*Vicia faba*), Klee (*Trifolium sp*.), Erdnuss (*A-rachis sp*.) und Lucerne (*Medicago sp*.), die durch Symbiose mit Rhizobien auch auf weniger wertvollen Böden gedeihen, haben großen Anteil an der Landwirtschaft und damit an unserer Nahrungsgrundlage. Die Symbiose von Rhizobien mit Pflanzen dient nicht nur dazu, die Pflanzen selbst ausreichend mit Stickstoff zu versorgen, sondern wird bei Gründüngung dazu genutzt, den Stickstoff in pflanzenverfügbarer Form im Boden anzureichern (Gerhard Richter: Stoffwechselphysiologie der Pflanzen, 6. Auflage, Thieme Verlag, Stuttgart 1998). Dabei besteht allerdings auch hier die Gefahr der Nährstoffauswaschung während der Winterperiode.

Eine Reihe bekannter Bodenverbesserungsmittel unterstützt deshalb die komplizierten Prozesse bei der Symbiose von Wurzeln und Bakterien, bei der Lipo-chito-Oligosaccharid-Komplexe, die sogenannten Nod-Faktoren eine besondere Rolle spielen. Es wird vermutet, dass amphiphile Lipo-chito-Ollgosaccharid-Komplexe durch ihre hydrophoben Molekülteile die Insertion des Moleküls in die Lipiddoppelschicht der pflanzlichen Plasmamembran ermöglichen. Dementsprechend werden auch andere amphiphile Moleküle genutzt, um diesen Vorgang zu beschleunigen.

So ist aus "Influence of biogenic surface-active substances on formation of symbiosis Synorhizobium meliloti with alfalfa" von Shcheglova, N.S. et al. (Microbiology & Biotechnology, 2011, Nr. 1(13), S. 48-56) bekannt, dass die Stickstofffixierung durch Biotenside wie Rhamnolipid-Alginatpolymer-Biokomplexe und Trehalose-Lipide unterstützt wird, die die Symbiose zwischen *Synorhizobium meliloti* LN11 und Luzerne fördern.

In WO/1996/012685 wird die Verwendung von Phospholipiden zur Stimulierung des Pflanzenwachstums beschrieben. Die Phospholipide werden in Mengen von 0,5-30 g/m² auf den Boden ausgebracht, die beobachtete stimulierende Wirkung auf die Pflanzen wird auf die Aktivierung von Wachstum und Stoffwechsel der Mikroflora im Boden zurückgeführt.

Auch von synthetischen Wachstumsregulatoren ist bekannt (z. B. "Ivin" des National Enterprise Interdepartmental Science & Technology Center "Agrobiotech", Ukraine), dass sie auf die rhizobiale Symbiose mit Luzerne aktiv einwirken; sie verbessern die Nodulationsfähigkeit der Bakterien und erhöhen die stickstofffixierende Aktivität von Rhizobien, wie in "Bioragulation of Microbial-Plant Systems" von G.O. lutynska, S.P. Ponomarenko (Kiev, Nichlava 2010, P. 130-135, 256) beschrieben wurde.

Der Einsatz von Biotensiden zur Verbesserung der Stickstofffixierung ist allerdings auch mit Nachteilen verbunden: So haben oberflächenaktive Verbindungen Auswirkungen auf das gesamte Ökosystem. Bei oberflächenaktiven Stoffen wie Biotensiden können möglicherweise unpolare Strukturanteile in die Lipidschicht von Membranen der Bodenlebewesen eindringen. Das könnte Änderungen in der äußeren Ladung, Konformation und Durchlässigkeit der Zellmembran der im Boden lebenden Organismen bewirken. Es wurde festgestellt, dass bei Rhamnolipidkonzentrationen über 20 mg/kg Bodenmasse toxische Effekte auftreten. Zudem ist die Gewinnung der Biotenside kostenintensiv und im Vergleich zu synthetischen Tensiden auf der Basis von Erdöl wirtschaftlich nicht konkurrenzfähig. So werden Biotenside derzeit nur in sehr geringen Mengen produziert und eine direkte Ausbringung der Biotenside ist zu teuer. Zwar ist es bei einer direkten Einbringung in den Boden möglich, die Wurzel- und Blattmasse beim Zwischenfruchtanbau zu erhöhen, andererseits können auch hier Risiken für die zahlreichen bodenbesiedelnden Organismen nicht ausgeschlossen werden. Auch ist das Problem der Speicherung von Restnährstoffen der Vorfrucht sowie der Minimierung der Nitrat-, Kalium-, und Magnesiumauswaschung über den Winter noch ungelöst.

Ferner kann die Stickstofffixierung durch Polysaccharide unterstützt werden. So ist bekannt, Polysaccharide natürlichen Ursprungs wie Stärke, Dextrin, Pektin, Zellulose, Karrageen, Alginate oder Mischungen dieser Stoffe zu nutzen, um die Keimung von Leguminosensamen anzuregen, indem die Polysaccharide die Adsorption von Bakterien an der Oberfläche der Samen unterstützen (siehe "Bacterial adhesion: Mechanisms and physiological significance", J.W. Costerton, M.J. Marrie, K.J. Cheng et al., New Jork: Plenum press, 1985, S. 43, und "Change in electrosurface properties of Methylomonas rubra cells at contact interaction with particles of silicon dioxide", A.S. Gordienko, I.V. Zbanatskaya., I.K. Kurdish., Can. J. Microbiol., 1993, Bd. 39, Nr. 9., S. 901-905). Die Samen werden zu diesem Zweck mit Lösungen dieser Polysaccharide benetzt, wofür sich von Mikroorganismen, Pflanzen und Tieren gebildete Polysaccharide eignen. Ferner erhöht die Behandlung die Fixierung verschiedener Präparate für Pflanzen ("Liposan - preparation for plant", O.V. Barbakar, Plant Protection, 2008, Nr. 3, S. 28-29).

In US 2005/0256001 A1 ist eine Polysaccharid und/oder Protein enthaltende Zusammensetzung zur Förderung der Keimung der Samen, der Wurzel-Entwicklung, des Wachstums und der Resistenz der Pflanzen gegen Infektionen beschrieben. Dass Polysaccharide die Resistenz der Pflanzen verbessern können, wird ferner von J.A. Leit, D.L. Coplin in "Exopolisaccharides in plant-bacterial interactions" (Annual Rev. Microbiol., 1992, Nr. 46, S. 307-346) und von D. Wim, A. Haeze, M. Holsters in "Surface polysaccharides enable bacteria to evade plant immunity" (Trends in Microbiology, 2004, Bd. 12, Nr. 12, S. 558-561) beschrieben.

Weitere Schriften, die die fördernde Wirkung von Polysacchariden auf die symbiotische Beziehung der Pflanzen(samen) mit Bakterien behandeln, sind "Cellular glycogen-1,2-glucans, polyhydroxybutiric acid and extracellular polysaccharides in fast-growing species of *Rhizobium"* (Zevenhuizen L.P., Antonie van Leeuwenhoek, J. Microbiol., 1981, Nr. 47, S. 103-108), "Efficiency of symbiotic nitrogen fixation by soybean bacterial action ekzopolisaharydu" (O.D. Krugova, N.M. Mandrovskay, V.M. Bagnyuk, I.P. Grugoryuk, Trans. National Academy of Sciences of Ukraine, 2000, Nr. 2, S,184-187), "Effect of bacterial exopolysaccharide the efficiency of symbiotic nitrogen fixation of pea and soybean plants" (O.D. Krugova, N.M. Mandrovskay, S.M. Ohrimenko, Physiol. and biochem. cult. plants, 2002, Bd. 34, Nr. 3, S. 239-244), "Effects of synthetic polysaccharide on the growth of nodule bacteria and rhizogeny pea" (N.M. Mandrovskay, O.D. Krugova, S.M. Ohrimenko, Agriculture Zh., 2005, Nr. 4, S. 47-51), "The role of seed treatment legumes biologicals preparation EPAA in improving immunity and productivity of plants" (S.K. Vocelko, S.V. Lapa, L.A. Dankevich, Agricultural. microbiol., 2007, Nr. 4, S. 161-171), "Carrying agent for crop protection systems based on microbial polysaccharides" (S.K. Vocelko, O.O. Litvinchuk, L.V.Tokarchuk, Science. Bulletin of the Uzhgorod National. Univ. Biology, 2001, S. 147-149).

Die Zugabe der Biotensid-Rhamnolipid-Alginatpolymer-Biokomplexe oder der Trehaloselipid-Biotenside in einer Konzentration von 0,01 g/l bei Kultivierung von *Synorhizobium melitoti* im Fermenter erhöht die Effektivität des biologischen Biopräparats. Die Behandlung von Luzerne-Samen mit diesem bakteriellen Präparat stimuliert die Symbiosebildung zwischen *Synorhizobium meliloti* und Luzerne. Die Anwendung dieses bakteriellen Präparats erhöht auch die Biomasse der Luzerne, siehe N.S. Shcheglova, O.V. Karpenko, R.I. Vildanova, M.V. Prystay, N.Yu. Lisova, T.M. Nogina, "Influence of biogenic surface-active substances on formation of symbiosis Synorhizobium meliloti with alfalfa", Microbiology & Biotechnology, 2011, 1(13), S. 48-56.

Das für die Stickstofffixierung notwendige Enzym Nitrogenase ist extrem sauerstoffempfindlich. Die niedrige Sauerstoffkonzentration in den Knöllchen wird durch Leghämoglobin reguliert. Es wurde beobachtet, dass Polysaccharide nicht rhizobialer Herkunft und Glycopolymere von Rhizobien die Aktivität der Redox-Enzyme (Peroxidase und Katalase) erhöhen. Dies deutet darauf hin, dass die Polysaccharide die Formierung und die Funktionsfähigkeit der Symbiose beeinflussen (ähnlich wie die Wirkung der Phytohormone) siehe O.D. Krugova, N.M. Mandrovskay, S.Yu. Kocz: "Influence of synthetic polysaccharide on symbiosis efficiency and activity of peroxidase and catalase in pea plants and soybean", Agricultural. mikrobiol. 2006, Bd. 4, S. 62-73.

Die Wirkung ist in vielen Fällen konzentrationsabhängig. Eine exakte Konzentration ist schwierig einzustellen. Bei Überschreitung einer optimalen Konzentration können Schädigungen des Ökosystems Boden nicht ausgeschlossen werden.

Am häufigsten werden pflanzliche Tenside wie Saponine aus Luzerne eingesetzt, wie etwa von Oleszek W.A. in "Composition and Quantitation of Saponins in Alfaalfa (Medicago sativa L.) Seedings" (J. Agric. Food Chem., 1998, Bd. 46, Nr. 3, S. 960-962) beschrieben. Die Wirkung der Saponine ist konzentrationsabhängig: So hemmen Saponin-Lösungen mit 0,1 mg/ml das Wachstum der Wurzeln von vielen Testobjekten. Durch Reduzierung der Konzentration der Lösungen wurde die Hemmwirkung deutlich reduziert und das Wurzelwachstum von Tomaten und Gurken stimuliert (O.I. Dzyuba, E.A. Golovko: "Saponins rhododendron yellow, and their biological activity", Physiology and byochem. cult. plants, 2000, Bd. 32, Nr. 6, S. 469-473).

Es wurde gezeigt, dass die Saponine, die in den Wurzeln von Winter-Wicke nachweisbar sind, Signalfunktion bei der Formierung symbiotischer Beziehungen zwischen Bakterien und Pflanzen haben. Saponin in einer Konzentration von 0,005% stimulierte die Nodulationsaktivität und die Initiation von den Wurzelknöllchen in R. *leguminosarum* Winter-Wicke und Lupine *Bradyrhizobium* sp. (M. Galan, N. Lisova, W. Oleszek: "The role of saponins in nodulation of leguminous plants", Phytochemistry and Application of Plant Saponins: International conference on saponins, 8.-10. September 2004, Polen, - 532 p.).

Weiter ist der Einsatz synthetischer Tenside bekannt. Synthetische Tenside werden bei der Saatgutsvorbereitung eingesetzt, um die Effektivität von Pflanzenwirkstoffen zu erhöhen. Diese Vorbehandlung vermindert die Entwicklung von Krankheiten und trägt so zur Ertragssteigerung bei (F.M. Humpherson-Jones: "Effect of surfactants and fungicides on clubroot (Plasmodiophora brassicae) of brassicas", Annals of Applied Biology, 1993, Bd. 122, Nr. 3, S- 457-465).

Aus WO9839273A1 und WO9623408A1 sowie von A. Ronen, "A new nondestructive and long-lasting in vivo delivery system for foliar nutrients", International Water & Irrigation, 2002, Bd. 22, Nr. 4, S. 34-41) und Z. Wiesman et al. , "Foliar fertilization with Olive Nutri-Vant for increase of olives and olive oil yields", Alon Hanotea, 2002, Bd. 56, S. 128-132, ist die Verwendung synthetischer Tenside in Kombination mit wasserlöslichen Düngern bekannt, um ihre Wirkung und Wasserlöslichkeit zu verbessern. Von D, Crowley et al. ("Zinc Fertilization of Avocado Trees", Hort Science, 1996, Bd. 31, Nr, 2, S. 224-229) und J. Nalewaja et al, ("Nitrogen Fertilizer, Oil, and Surfactant Adjuvants with Nicosulfuron", Weed Technology, 1998, Bd. 12, S. 585-589) wurde gezeigt, dass die Zugabe von synthetischen Tensiden die Aufnahme von Zink und Harnstoff durch Avocado stimuliert.

Allerdings wird bei der Tensidbehandlung von Samen die Wasserspeicherung während der Keimungsphase nicht ausreichend unterstützt. Zudem sind synthetische Tenside schlecht abbaubar. Die Tenside und auch nach der Behandlung auf den Samen verbleibende Reste können das ökologische Gleichgewicht des Bodens stören.

Tiermehl ist ein organisches Düngemittel mit hohen Stickstoff- und Phosphatgehalten und wesentlichen Anteilen an pflanzenverfügbarem Stickstoff. Der Anteil an verfügbarem Stickstoff kann bis zu 70 % betragen. Zur Herstellung der für die Anwendung als Düngemittel einsetzbaren Produkte, die bei der Verwertung von Tierkörpern und Schlachtabfällen anfallen, muss gewährleistet sein, dass die verderbliche Rohware zunächst thermisch sterilisiert wird. Aus dem sich dabei bildenden sterilen Fleischbrei wird Wasser durch Trocknen und Fett durch Pressen entfernt. Der erhaltene Presskuchen wird nach Abkühlung zermahlen und steht in dieser Form zur Weiterverarbeitung zur Verfügung. Das Schüttgewicht des Ausgangsproduktes beträgt etwa 600 kg/m³.

Die breite Anwendung von Tiermehl als Düngemittel wird bislang dadurch eingeschränkt, dass Tiermehl als feines Pulver vorliegt, das nicht mit den üblichen Geräten für die Düngerausbringung ausgebracht werden kann. Da das Verfüttern von verarbeiteten tierischen Proteinen (also auch von Tiermehl) an Nutztiere grundsätzlich verboten ist, muss sichergestellt sein, dass im Umgang mit Tiermehl eine Verunreinigung von Futtermitteln sicher ausgeschlossen ist. Ferner darf Tiermehl ausschließlich auf unbestelltem Ackerland ausgebracht werden und muss am gleichen Tag eingearbeitet werden, um eine Aufnahme durch Tiere sicher zu verhindern. Zudem kann aufgrund der hohen Staubentwicklung bei der Ausbringung von Tiermehl nicht ausgeschlossen werden, dass eine gesundheitliche Gefährdung für das Personal besteht oder dass es auf Weideflächen geweht wird. Aufgrund gesetzlicher Vorschriften muss aber sicher gestellt werden, dass Nutztiere für einen Zeitraum von 21 Tagen keinen Zutritt zu Flächen haben, auf denen Tiermehl als Dünger verwendet wurde bzw. die durch Auswehungen belastet wurden.

Weiter darf Tiermehl nicht auf landwirtschaftlich genutztem Grünland als organisches Düngemittel oder Bodenverbesserer eingesetzt werden und die Düngermengen im Herbst sind auch beim Anbau von Zwischenfrüchten auf insgesamt höchstens 80 kg Gesamtstickstoff begrenzt, um die Auswaschung des Stickstoffes und die Belastung des Grundwassers zu vermindern. Generell verboten ist die Anwendung von Tiermehl in den Zonen I und II aller Wasserschutzgebiete sowie der Zone III von Nitratsanierungsgebieten.

So ist die Verwertung von Tiermehl bisher stark eingeschränkt, aber auch Biotenside werden bislang nicht in großem Umfang genutzt,

Pflanzenstärkungsmittel sind gemäß § 2 Nr. 10 des Pflanzenschutzgesetzes (PflSchG) Stoffe, die dazu bestimmt sind, die Widerstandsfähigkeit der Pflanzen gegen Schadorganismen zu erhöhen und Pflanzen vor nichtparasitären Beeinträchtigungen zu schützen. Ein Beispiel ist ChitoPlant®, das zu 100 % aus Chitosan besteht. Der technische Einsatz in der Landwirtschaft ist einfach, weil es mit herkömmlichen, landwirtschaftlichen Geräten gesprüht werden kann (ChiPro GmbH, Bremen). Besonders im ökologischen Landbau besteht ein großer Bedarf an Pflanzenstärkungsmitteln. Gezieltes Ausbringen der Pflanzenstärkungsmittel in die Umgebung des keimenden Samens und in den Wurzelbereich, um so die Applikationsmenge zu optimieren, ist bislang nicht möglich.

Aus DE 10 2010 045 078 A1 ist ein Bodenverbesserungsmittel bekannt, das sich aus einem Mineralverbund aus Biomineralien (amorphes Siliziunidioxid und Illit-Smektit-Minerale, dotiert mit anorganischen Thiocyanaten), Natur-Zeolithmineral und mineralischen Düngemitteln zusammensetzt. Die Zeolithe wirken als Wasserspeicher und verstärken die Depotwirkung für den Mineraldünger.

Ferner hat sich das Mineral Kieserit (Mg[SO₄]·H₂O) als Dünger zur Behebung von Magnesiummangel in land- und forstwirtschaftlich genutzten Böden seit vielen Jahren bewährt. Besonders auch auf Böden mit einem pH-Wert von über 7 hat der Kieserit-Eintrag einen bedeutenden Vorteil gegenüber oxidischen oder carbonatischen Magnesiumdüngern.

Weiter ist bekannt, dass die Stickstofffixierung durch Geominerale unterstützt werden kann. Granulierte Präparate, die auf Mineralstoffen und Stickstoff-fixierenden Bakterien basieren, stimulieren das Wachstum und den Ertrag von Tomaten, Gurken und Sojabohnen.

Weiter ist bekannt, dass das Wachstum und die Nodulationsaktivität von Bradyrhizobium japonicum durch Geominerale unterstützt werden kann. Granulierte Präparate, die auf Mineralstoffen, Stickstofffixierenden und Phosphor mobilisierenden Bakterien basieren, stimulieren das Wachstum und den Ertrag von verschiedenen landwirtschaftlichen Pflanzen [I. K. Kurdish, N. M. Melnykova. Influence of clay minerals on growth and nodulation activity of Bradyrhizobium japonicum. Microbiologichny zhurnal, 2011, Vol.73, No. 4].

Geominerales Glaukonit wird als Zusatz zu Mineraldünger bei der Kulitvierung von Kartoffeln eingesetzt (Yu.S. Kolyagin, V.N. Meshkov: "Glauconite - a valuable addition to mineral fertilizers", potatoes and vegetables, 2008, Nr. 8. S. 8-9; A. A. Vasilev: "Glauconite - an effective natural fertilizer potato", Agric. Gaz. of the Urals, 2009, Nr. 6, S. 35-37).

Eine Kombination von Biotensiden und Geomineralen ist von N.Yu. Lisova, N.S. Shcheglova, R.I. Vildanova, O.P. Cholovska, O.V. Karpenko in "Improvement of the efficiency of the biopreparations of associative diazotrophes in the spring barley growth technologies: the role of biogenic surfactants and glauconite" (Naukovi praci UNGU, Basics of Biological Plant Cultivation in Modern Agriculture, 2011, Bd. 1, Nr. 2, S. 116-120) beschrieben. Die Zugabe von Biotensid-Rhamnolipid-Alginatpolymer-Biokomplexen (0,05 g/l) und Glaukonit (1 g/l) bei der Kultivierung der Bakterien *Enterobacter nimipressuralis* LN1 im Fermenter erhöht die Ausbeute. Die Behandlung von Gerstensamen mit diesem bakteriellen Präparat stimuliert einen Zuwachs der Biomasse von Gerste. Eine Verbesserung der Bodenstruktur kann allerdings auf diese Weise nicht erreicht werden.

Ausgehend von diesem Stand der Technik liegt der vorliegenden Erfindung die Aufgabe zugrunde, eine Zubereitung bereitzustellen, die in verschiedenen Anwendungen im Pflanzenanbau genutzt und an den Bedarf angepasst werden kann, um die im Stand der Technik bestehenden und oben aufgeführten Nachteile zu überwinden. So soll die Zubereitung eine wirtschaftliche Nutzung von Tiermehl mit dessen hohem Phosphatgehalt ermöglichen und gleichzeitig pflanzenverfügbaren Stickstoff mit verringertem Auswaschungsrisiko bereitstellen. Auch die Auswaschung von Nitrat, Kalium und Magnesium über den Winter soll minimiert werden. Eine Belastung des Bodens mit höheren Konzentrationen von Biotensiden oder synthetischen Tensiden, die unter Umständen toxische Auswirkungen auf die mikrobiellen Bodenpopulationen haben können, soll vermieden werden. Gleichzeitig soll die Zubereitung als Bodenverbesserer wirken, um vor allem die Wasserspeicherkapazität, den Anteil an pflanzenverfügbarem Wasser, die Speicherkapazität für Mineraldünger, die Belüftung und durch das Zusammenwirken dieser Komponenten die Bodenfruchtbarkeit zu erhöhen.

Diese Aufgabe wird durch eine Zubereitung mit den Merkmalen des unabhängigen Anspruchs 1 gelöst.

Bevorzugte Verwendungen der erfindungsgemäßen Zubereitung werden durch die Merkmale des Anspruchs 6 offenbart.

Die weitere Aufgabe, die erfindungsgemäße Zubereitung herzustellen, wird durch das Verfahren mit den Merkmalen des unabhängigen Anspruchs 7 gelöst.

Die Aufgabe, die Zubereitung in einer gut auszubringenden, exakt zu dosierenden Applikationsform bereitzustellen, wird durch ein Verfahren mit den Merkmalen des Anspruchs 11 und durch ein Verfahren mit den Merkmalen des Anspruchs 15 gelöst.

Bevorzugte Ausführungsformen der Zubereitung und der Applikation werden durch die jeweiligen Unteransprüche beschrieben.

Eine erfindungsgemäße Zubereitung zur Förderung des Pflanzenanbaus weist neben wenigstens einem Mixed-Layer-Tonmineral und zumindest einem Zeolithmineral zumindest ein Biotensid auf, das mit dem oder den Mixed-Layer-Tonmineral(en) und dem oder den Zeolithmineral(en) einen Geopolymer-Biotensid-Komplex bildet, der eine Netzwerk-Struktur aufweist, die durch das Zeolithmineral gebildet wird, das in einem Hydrogel des Mixed-Layer-Tonminerals dispergiert ist. Dabei ist das Biotensid oder sind die Biotenside in die Netzwerk-Struktur eingelagert.

Generell umfassen Geopolymere anorganische Bindemittel auf Silikatbasis, insbesondere natürliche Silikate (Silikatminerale) wie Zeolithe und Schichtsilikate, aber auch Oxide, Calcite und Sulfate. So werden unter der Bezeichnung Geopolymer vorliegend Mixed-Layer-Tonminerale und Zeolithe zusammengefasst.

Biotenside sind Tensidmoleküle mikrobieller Herkunft, die auf der Basis nachwachsender Rohstoffe wie Pflanzenöl- und Zuckersubstrate hergestellt werden können und einen hohen tensidischen Wirkungsgrad mit guter biologischer Abbaubarkeit verbinden. Biotenside lassen sich chemisch in Glykolipide, Lipopeptide und Lipoaminosäuren, Lipoproteine und Lipopolysaccharide sowie den Phospholipiden, Mono- und Diglyceride und Fettsäuren unterteilen, wobei Glykolipide, die sich wiederum in Rhamnoselipide, Sophoroselipide, Trehalose- und andere mycolsäurehaltige Glycolipide und Cellobiose- und Mannosylerythritollipide unterteilen lassen, die am weitesten verbreitete Gruppe niedermolekularer Biotenside sind.

Mit der erfindungsgemäßen Zubereitung, eingebracht in den Boden, kann die Biomassenzufuhr gesteigert, die Umwandlung der Biomasse in Kompost beschleunigt und gleichzeitig das Auswaschungsrisiko der bioverfügbaren Stickstoffverbindungen beim Zwischenfruchtanbau auf ökologische Weise verringert werden. Neben dem Erhalt von Nährstoffen im organischen Kreislauf kann eine produktive Verwertung des Niederschlagswassers zwischen zwei Hauptkulturen gesichert werden.

Ferner kann die Zubereitung zumindest ein Pflanzenfördermittel aufweisen. Unter Pflanzenfördermittel werden hierbei sämtliche Mittel verstanden, die das Gedeihen von Pflanzen unterstützen. Damit kann ein in die Zubereitung eingearbeitetes Pflanzenfördermittel biologischen Volldünger, bevorzugt sterilisiertes Tiermehl, Biodünger, mineralischer Dünger, Pflanzenstärkungsmittel, Pflanzenschutzmittel, weitere Pflanzenwuchsstoffe, Bodenverbesserungsmittel, Huminsäurederivate und Chelatbildner, Polysaccharide natürlichen Ursprungs oder Fungizide, bevorzugt Fungizide auf Chitinbasis, oder Kombinationen der vorgenannten umfassen.

Alternativ oder zusätzlich dazu kann die Zubereitung Pflanzenkohle aufweisen, die mit zumindest einem der genannten Pflanzenfördermittel dotiert ist. Die Pflanzenkohle hat bevorzugt eine mittlere Korngröße unter 2 mm.

Mit Pflanzenkohle wird ein weiterer Bodenverbesserer eingebracht, der durch pyrolytische Verkohlung rein pflanzlicher Ausgangsstoffe hergestellt wird und bevorzugt als Trägerstoff für Pflanzenfördermittel eingesetzt wird. Da Pflanzenkohle - wenn überhaupt - nur sehr langsam abgebaut wird, wird das ursprünglich von Pflanzen assimilierte CO₂ langfristig der Atmosphäre entzogen. Dagegen werden die von den Pflanzen aufgenommenen Nährstoffe vollständig an den Boden zurückgegeben. Daher stellt Pflanzenkohle neben ihrer Rolle als Bodenverbesserer zunehmend ein Mittel zum Klimaschutz dar. Da die Pflanzenkohle dotiert in der Zubereitung bereitgestellt wird, wird vermieden, dass deren hohe Adsorptionsleistung und die wachsende Kationenaustauschkapazität dazu führt, dass verfügbare Nährstoffe und Wasser im Boden von der Pflanzenkohle fixiert werden und dadurch den Pflanzen nicht mehr zur Verfügung stehen.

Bei dem verwendeten Mixed-Layer-Tonmineral kann es sich um Smektit-IllitMixed-Layer-Tonmineral oder Kaolinit-Chlorit-Mixed-Layer-Tonmineral oder eine Mischung davon handeln. Als dispergiertes Zeolithmineral kann ein Klinoptilolith, ein Magnesiumaluminiumsilikat, ein Feldspat oder Mischungen der genannten eingesetzt werden. Vorteilhaft kann die Zubereitung zumindest ein weiteres Geopolymer als Bodenverbesserer und/oder Mineralstofflieferant aufweisen, das aus der Gruppe ausgewählt ist, die Magnesiumsilikate, Magnesium-Lithium-Silikate, Magnesiumaluminiumsilikate, Opal-CT, Feldspate, Kreide, Quarz, Kieserit, Kieselgur aufweist.

Als Biotensid kann ein anionisches Biotensid oder ein amphiphiler Biotensid-Alginatpolymer-Komplex eingesetzt werden, wobei das Biotensid bevorzugt ein Rhamnolipid ist, das aus einem Bakterium der Gattung *Pseudomonas* gewonnen wird. Um toxische Effekte bei der Einbringung in den Boden zu vermeiden, wird ein Anteil des Biotensids in dem Geopolymer-Biotensid-Komplex auf höchstens 20 mg/kg beschränkt.

Je nach gewählter Applikationsform kann die Zubereitung ein Härtegradeinstellungsmittel aufweisen, das bevorzugt ein Mineral, besonders bevorzugt Kieserit ist, das in Abhängigkeit eines gewünschten Härtegrads in einem Gewichtsverhältnis zu dem Geopolymer-Biotensid-Komplex von 1:1 bis 1:10 vorliegt.

Die erfindungsgemäße Zubereitung kann zur Herstellung eines Granulats zur Ausbringung auf einem Pflanzboden zur Verbesserung der Bodenstruktur und/oder zur Erhöhung der Gebrauchseigenschaften bei Zierrasen und/oder zur Pilzbekämpfung und/oder im Präzisionsackerbau und in der Forstwirtschaft und/oder zur Beschichtung von Pflanzensamen verwendet werden.

Ein erfindungsgemäßes Verfahren zur Herstellung einer Mixed-Layer-Tonmineral- und Zeolith-haltigen Zubereitung zur Förderung des Pflanzenanbaus, sieht die folgenden Schritte vor:
- quellen Lassen des zumindest einen Mixed-Layer-Tonminerals in einem Quellmittel,
- Dispergieren des gequollenen Mixed-Layer-Tonminerals in einem flüssigen Medium zu einer homogenen Suspension und Zusetzen zumindest eines Biotensids,
- Dispergieren des zumindest einen Zeolithminerals in der Suspension, wobei Geopolymer-Biotensid-Komplexe durch sterische Stabilisierung des Zeolithminerals mit dem dispergierten Mixed-Layer-Tonmineral gebildet werden.

So kann die erfindungsgemäße Zubereitung in einer Form als Suspension vorliegen, die den Geopolymer-Biotensid-Komplex enthält, der schon allein ohne weitere Pflanzenfördermittel als Bodenverbesserer wirkt. Vorteilhaft bietet sich aber der Geopolymer-Biotensid-Komplex als Träger für verschiedene Pflanzenfördermittel an, die auf diese Weise genau dosiert und sicher in den Boden eingebracht werden können.

Bevorzugt allerdings wird diese Suspension einem Konzentrierungsschritt unterzogen, um einen Dickschlamm zu erhalten, der die Geopolymer-Biotensid-Komplexe enthält. Zum Konzentrieren der Suspension kann vor der Zugabe des zumindest einen Biotensids oder nach der Dispergierung des zumindest einen Zeolithen zumindest ein Pflanzenfördermittel, vorzugsweise in fester Form zugegeben werden, wobei vorteilhaft gleichzeitig ein gewünschtes Pflanzenfördermittel in die Zubereitung eingearbeitet wird. Hierbei können wasserbindende Pflanzenfördermittel wie beispielsweise Kieselgur, biologischer Volldünger in fester Form oder auch ein Polysaccharid eingesetzt werden.

Ferner kann zumindest ein weiteres Pflanzenfördermittel und/oder eine mit dem zumindest einen weiteren Pflanzenfördermittel dotierte Pflanzenkohle entweder zu der Suspension nach der Dispergierung des zumindest einen Zeolithminerals oder zu dem Dickschlamm zugegeben werden. Dabei wird die mit dem zumindest einen weiteren Pflanzenfördermittel dotierte Pflanzenkohle durch gemeinsames Vermahlen des zumindest einen weiteren Pflanzenfördermittels mit der Pflanzenkohle, bevorzugt in Korngrößen unter 2 mm, erhalten.

Wird als Biotensid ein amphiphiler Biotensid-Alginatpolymer-Komplex eingesetzt, so umfasst das erfindungsgemäße Verfahren dessen Herstellung, die die Schritte umfasst:
- Herstellen eines sterilen wässrigen Nährmediums mit zumindest einer assimilierbaren Kohlenstoffquelle, zumindest einer assimilierbaren Stickstoffquelle und an sich bekannten Nährsalze in geeigneten Konzentrationen,
- Beimpfen des Nährmediums mit einem Bakterium der Gattung *Pseudomo*nas,
- Züchten der Bakterien der Gattung *Pseudomonas* bei einem pH-Wert im Bereich von 6,5 bis 7,5 und bei einer Temperatur im Bereich von 25 bis 30 °C aerob in bewegter Submers-Kultur,
- Abtrennen der Zellen des Bakteriums der Gattung *Pseudomonas* von dem wässrigen Medium und
- Abtrennen des Biotensid-Alginatpolymer-Komplexes aus dem zellfreien wässrigen Medium.
Durch geeignete Filterwahl können die beiden letzten Schritte einfach und kostengünstig ausgeführt werden.

Die als Dickschlamm vorliegende Zubereitung mit dem Geopolymer-Bioten-sid-Komplex kann bereits in den Boden eingebracht werden. Vorteilhaft kann die Zubereitung aber zu einfach auszubringenden und zu dosierenden Granalien weiterverarbeitet oder zur Beschichtung von Samen genutzt werden.

So kann aus der erfindungsgemäßen Zubereitung sowohl Granulat zur Förderung des Pflanzenanbaus als auch beschichtetes Saatgut hergestellt werden. Hierfür werden die folgenden Schritte durchgeführt:
- Zugeben von Wasser oder einer wässrigen Lösung zumindest eines Pflanzenfördermittels zu dem Dickschlamm, und, zur Herstellung von beschichteten Samen, Zugeben der Samen,
- Granulieren des bzw. Beschichten der Samen mittels des Dickschlamms,
- Trocknen und Sieben des erzeugten Granulats oder der beschichteten Samen.

Vor Beginn des Granulierungs- bzw. Beschichtungsprozesses kann zu dem Dickschlamm ein Härtegradeinstellungsmittel in einer Menge zugegeben werden, die von einem für die Granalien oder die Samenbeschichtung vorgesehenen Härtegrad abhängt.

Ferner kann, je nach dem, ob und welche Pflanzenfördermittel der Dickschlamm bereits enthält, das Auftragen zumindest eines Pflanzenfördermittels oder einer mit zumindest einem Pflanzenfördermittel dotierten Pflanzenkohle auf die Granalien oder die Samenbeschichtung vor dem Trocknen vorgesehen sein.

Der beim Sieben des Granulats/beschichteten Saatguts erhaltene Siebrückstand kann vorteilhaft zum Konzentrieren der Suspension, um den Dickschlamm zu erhalten, genutzt werden und entsprechend rückgeführt werden.

Ein alternatives Verfahren zur Herstellung von Granulat zur Förderung des Pflanzenanbaus oder zur Herstellung von beschichteten Samen nutzt die suspendierte Zubereitung, die nach der Dispergierung des zumindest einen Zeolithminerals erhalten wird, und umfasst die Schritte:
- Zugeben von Wasser oder einer wässrigen Lösung zumindest eines Pflanzenfördermittels und Zugeben eines Geopolymergemischs oder der zu beschichtenden Samen zu der Zeolith-Suspension,
- Granulieren des Geopolymergemischs mit der Zeolith-Suspension oder Beschichten der Samen mit der Zeolith-Suspension,
- Trocknen und Sieben des Granulats oder der beschichteten Samen.

Auch hier kann, falls sinnvoll, der beim Sieben erhaltene Siebrückstand zum Konzentrieren der Suspension rückgeführt werden, etwa um in einer parallelen Verfahrenslinie Dickschlamm zu erhalten.

So kann in einer Verfahrensvariante, in der die erfindungsgemäße Zubereitung zu dem noch feuchten Granulat oder den noch feuchten beschichteten Samen vor dem Trocknen und Fortsetzen des Granulierens zugefügt wird, auch Dickschlamm eingesetzt werden.

Auch bei diesem alternativen Weiterverarbeitungsverfahren kann das Zugeben eines Härtegradeinstellungsmittels zu der Suspension, die nach der Dispergierung des zumindest einen Zeolithminerals erhalten wird, und/oder beim Zufügen der Zubereitung vorgesehen sein, und zwar in einer für den vorgesehenen Härtegrad vorbestimmten Menge.

Weitere Ausführungsformen, sowie einige der Vorteile, die mit diesen und weiteren Ausführungsformen verbunden sind, werden durch die nachfolgende ausführliche Beschreibung deutlich und besser verständlich. Unterstützend hierbei ist auch der Bezug auf die Figuren in der Beschreibung.

Es zeigt:
**Fig. 1** ein Fließschema einer ersten Verfahrensvariante zur Herstellung einer erfindungsgemäßen Zubereitung,
**Fig. 2** ein Fließschema einer weiteren Verfahrensvariante zur Herstellung einer erfindungsgemäßen Zubereitung,
**Fig. 3** ein Fließschema eines Verfahrens zur Herstellung eines Granulats aus der erfindungsgemäßen Zubereitung,
**Fig. 4** ein Fließschema eines Verfahrens zur Beschichtung von Samen mit der erfindungsgemäßen Zubereitung,
**Fig. 5** ein Fließschema eines alternativen Verfahrens zur Beschichtung von Samen mit der erfindungsgemäßen Zubereitung
**Fig. 6** ein Diagramm zum Längenwachstum von *Lolium perenne L* unter dem Einfluss von Geomineralien und unter der Kombination von Geomineralien und Biotensiden im Vergleich zu einer Kontrollgruppe,
**Fig. 7** ein Diagramm zur Massezunahme der *Lolium perenne L* unter dem Einfluss von Geomineralien und unter der Kombination von Geomineralen und Biotensiden im Vergleich zu einer Kontrollgruppe,
**Fig. 8** ein Diagramm zum Wachstum von *Saccharomyces cerevisiae* unter dem Einfluss der Biotenside Rhamnolipide (Rh) und Rhamnolipid-Alginat-Komplex (Bio) im Vergleich zu einer Kontrollgruppe,
**Fig. 9** ein Diagramm zum Einfluss der Mischung aus Biotensiden und Tonmineralen auf den Glukosestoffwechsel in Perfusionszellkulturen.

Hierin wird eine Zubereitung aus mit biologischen Volldüngern und/oder Pflanzenstärkungsmittel und/oder Pflanzenschutzmitteln dotierbaren Blotensid-Geopolymer-Komplexen zur Ertragssteigerung im Pflanzenbau offenbart, sowie Verfahren zu ihrer Herstellung und ihre Verwendung.

Mit der erfindungsgemäßen Zubereitung kann zum einen die Wasserspeicherkapazität des Bodens und damit der Anteil an pflanzenverfügbarem Wasser, die Speicherkapazität für Mineraldünger, die Belüftung und durch das Zusammenwirken dieser Komponenten die Bodengare verbessert und damit die Bodenfruchtbarkeit erhöht werden. Damit können langfristig stabile Erträge auch unter sich verändernden Klimabedingungen erwirtschaftet werden, die sich in den letzten Jahren gezeigt haben, in denen die Witterungsverläufe von häufigeren und größeren Extremen, von langen Trockenperioden und übermäßigem Nässeangebot geprägt waren.

Die in der Natur vorkommenden Bodentypen sind Gemische der Grundtypen Sandboden und Tonboden. Diese Mischtypen kommen mit dem Wechsel von langen Trockenperioden und übermäßigem Nässeangebot unterschiedlich gut zurecht. Bei Böden mit hohem Tonanteil verkleben die Teilchen und bilden kaum Zwischenräume. Wenn der Boden nicht völlig ausgetrocknet ist, haftet in diesen Zwischenräumen Wasser, das so kräftig gebunden ist, dass es nur in geringem Maß an die Pflanze abgegeben werden kann. Somit können sich in einem Tonboden Welkerscheinungen zeigen, obwohl genügend Wasser vorhanden ist. Die Belüftung ist in Tonböden generell schlecht.

Bei der erfindungsgemäßen Zubereitung sorgen die strukturbildenden Geopolymere des Geopolymer-Biotensid-Komplexes für ein bodenverbesserndes Gerüst, bei dem die Poren bei Wasseraufnahme nicht verstopfen. Das damit zur Verfügung stehende Bodenverbesserungsmittel speichert nicht nur Wasser und Nährstoffe, sondern sichert auch ein für die gute Entwicklung der Mikroorganismen ausreichendes Luftporenvolumen. Die Einbindung der Biotenside in den Geopolymer-Biotensid-Komplex gestattet die Sicherung einer Konzentrationsobergrenze, um Schädigungen des Ökosystems Boden auszuschließen und dennoch die konzentrationsabhängige ertragssteigernde Wirkung zu erzielen.

Die in einer Ausführungsform der Erfindung beschriebene Beschichtung (Coating) von Pflanzensamen mit der erfindungsgemäßen bodenverbessernden Zubereitung kann den Anteil an pflanzenverfügbarem Wasser in unmittelbarer Nähe des keimenden Samens erhöhen, das eine unerlässliche Voraussetzung für die Keimung ist. Da viele Samen sehr wasserarm sind (Überdauerungszustand) und zunächst eine ganze Menge an Wasser aufnehmen bzw quellen müssen, um anschließend mit der Keimung zu beginnen, ist wichtig, dass genügend Wasser zur Verfügung steht. Zu Beginn der Keimung bricht als erstes die Wurzelanlage (Radicula) durch die Samenschale und beginnt sofort mit der Wurzelbildung. Für die weitere Versorgung des keimenden Samens ist wichtig, dass im Bereich der Wurzelbildung genügend Wasser in pflanzenverfügbarer Form und Mineralstoffe zur Verfügung stehen. Das Wurzelsystem kann Wasser aus dem Boden nur dann aufnehmen, wenn das Wasserpotential der Feinwurzeln niedriger ist als das des umgebenden Bodens. Je mehr ein Boden innerhalb einer Trockenperiode während der Keimungsphase und der Wurzelbildung an Wasser verarmt, desto stärker ist das Restwasser gebunden und ist damit weniger pflanzenverfügbar.

Bei dem anderen Extrem kann eine überschüssige Bodenfeuchte zu einer erhöhten Pilzanfälligkeit oder zum Absterben der Pflanzen führen. Die Gewinnung der für die Keimung benötigten Energie erfolgt durch Abbau der Reservestoffe über dissimilatorische Prozesse. Hier wird Sauerstoff als Elektronenakzeptor benötigt. Deshalb muss der Boden in der Umgebung des Samens gut belüftet sein, um einen ausreichenden Sauerstoffzutritt zu ermöglichen. Stark wasserspeichernde Tonminerale stören eine ausreichende Luftzirkulation. Diese gegensätzlichen Anforderungen der Sicherung eines Wasserpotentials in der Umgebung des Keims, das auch in Trockenperioden höher ist als das Wasserpotential der Feinwurzeln, bei gleichzeitiger Vermeidung von Staunässe und guter Luftversorgung werden durch die Erfindung erfüllt.

Nach der Entwicklung der ersten Blätter beginnt das Streckungswachstum der Internodien. Gleichzeitig beginnt die Ausbildung von Blättern, während in der Erde die Wurzel sich verzweigt, um weitere Nährstoffe aus dem Boden zu gewinnen. Mit der erfindungsgemäßen Zubereitung wird nach Einbringung in den Boden auch in dieser Phase die Versorgung mit Wasser und Nährstoffen im Bereich der Wurzelbildung sichergestellt, da durch die Zubereitung die Biotenside und der für das Pflanzenwachstum benötigte Dünger in unmittelbarer Nähe der sich entwickelnden Pflanze gespeichert wird.

In einer Ausführungsform wird die erfindungsgemäße Zubereitung bei der Verwertung von Tiermehl genutzt. Dazu wird die Zubereitung in Form von Granalien mit hoher Festigkeit verarbeitet, um die heute übliche Ausbreitung von Düngemitteln mit Kreiselstreuern bei der Ausbringung zu gestatten. Während vorteilhaft gleichzeitig die Vorteile der Biotenside und Geopolymere genutzt werden können, werden die mit der Verwendung von Tiermehl bisher verbundenen Nachteile vermieden.

Die erfindungsgemäßen, mit Phosphat- und Stickstoff angereicherten, die Bodengare fördernden Biotensid-Geopolymer-Komplexe sind zur umweltverträglicheren Düngung von Nutzpflanzen vor dem Hintergrund der ständig wachsenden Erdbevölkerung und ihrer Versorgung von immenser Bedeutung. Sie können aber auch bei der Anlage von Zier- und Gebrauchsrasen zur Erhöhung der Strapazierfähigkeit und zur Verminderung des Pflegeaufwandes genutzt werden. Um die Versorgung mit pflanzenverfügbarem Stickstoff zu verbessern, können solche Komplexe auch beim Zwischenfruchtanbau vorteilhaft eingesetzt werden. Die Biotensid-Geopolymer-Komplexe mit Tiermehl als Düngerkomponente führen zu einer hochwertigen Verwertung dieses in großen Mengen anfallenden Produkts. Die Rückgewinnung von Phosphaten, die dadurch möglich wird, gewinnt zunehmend an Bedeutung, da diese Wertstoffe bisher aus dem Nutzungskreislauf ausscheiden.

Die erfindungsgemäße Zubereitung eignet sich nicht nur zur Herstellung von Granulat, sondern auch zum Beschichten bzw. Coatieren oder Pillieren von Pflanzensamen. Der Geopolymer-Biotensid-Komplex der erfindungsgemäßen Zubereitung wird aus einem Mixed-Layer-Tonmineral, einem (Natur-) Zeolithmineral und einem Biotensid gebildet. Es können jeweils aber auch Mischungen aus mehreren Komponenten eingesetzt werden, d. h. jeweils ein Gemisch aus unterschiedlichen Mixed-Layer-Tonmineralen, aus Zeolithmineralien und/oder Biotensiden. Die Biotenside werden in Netzwerk-Strukturen eingelagert, die durch Zeolithe, die in einer Hydrogel-Suspension des Mixed-Layer-Tonminerals dispergiert sind, bereitgestellt werden. So dienen die Zeolithe und Tonminerale als strukturbildende Träger der Biotenside.

Die Netzwerk-Struktur stellt damit ein Mineralkomposit aus Geopolymeren dar und kann sich aus Klinoptilolith, Smektit-Illit-Mixed-Layern, KaolinitChlorit-Mixed-Layern, Magnesiumsilikaten, Magnesium-Lithium-Silikaten und/oder Magnesiumaluminiumsilikaten, Opal-CT, Feldspat, Kreide, Quarz, Kieserit, Kieselgur zusammensetzen. Bevorzugte Zusammensetzungen des Mineralkomposits können die nachfolgend beschriebenen relativen Mischungsverhältnisse aufweisen. Die Aufzählung gibt eine Orientierung, die von einem Fachmann je nach vorgesehener Anwendung variiert werden kann, ohne den Rahmen der Erfindung zu verlassen.

Als Zeolithmineral kann Klinoptilolith in einer Menge von 10 bis 70 Gew.-% eingesetzt werden, Smektit-Illit-Mixed-Layer-Tonmineral kann einen Anteil von 5 bis 50 Gew.-% aufweisen; alternativ oder zusätzlich kann Kaolinit-Chlorit-Mixed-Layer-Tonmineral in einem Anteil von 10 bis 50 Gew.-% eingesetzt werden. Weitere Geopolymere, die in das Mineralkomposit integriert werden können, sind Magnesiumsilikate, Magnesium-Lithium-Silikate und/oder Magnesiumaluminiumsilikate, die entsprechend einem Mg-Gehalt von 1 bis 5 Gew.-% enthalten sein können oder Magnesiumsalze mit organischen Anionen von 1 bis 5 Gew.-%. Opal-CT und Feldspat können jeweils in Anteilen von 1 bis 10 Gew.-% eingesetzt werden. Kreidegrand und/oder Kieselgur können jeweils in einer Menge von 3 bis 15 Gew.-% enthalten sein. Kieserit kann einen Anteil von 3 bis 8 Gew.-% und Quarz einen Anteil von 1 bis 10 Gew.-% an dem Mineralkomposit aufweisen.

In das aus den Geopolymeren gebildeten Mineralkomposit können Wirkstoffe wie die Biotenside eingebettet werden, ferner kann das Mineralkomposit Hilfs- und Zusatzstoffe aufweisen.

Zusatzstoffe können aus einer Gruppe ausgewählt werden, die biologischen Volldünger, Biodünger, mineralischen Dünger, Pflanzenstärkungsmittel, Pflanzenschutzmittel, weitere Pflanzenwuchsstoffe, Bodenverbesserungsmittel, Huminsäurederivate und Chelatbildner, Polysaccharide natürlichen Ursprungs und Fungizide sowie Insektizide umfasst.

Hilfsstoffe sind dem Fachmann aus der Pillerung von Saatgut bekannt.

Die einfachste Zusammensetzung enthält nur das Mineralkomposit aus Klinoptilolith und Mixed-Layer-Tonmineral sowie Biotenside, vorzugsweise Rhamnolipi d-Alginat-Komplexe. Je nach gewünschter Anwendung können weitere biologische Wirkstoffe eingearbeitet werden.

In dem Mineralkomposit liegen die Silikate, auch die nur begrenzt Wasser aufnehmenden Zeolithe, in dispergierter Form vor, so dass die im Mineralkomposit insbesondere in den quellfähigen Geopolymeren enthaltenen natürlichen reaktionsfähigen Kieselsäuren bei der Aufbereitung in wässriger Umgebung mit den anderen, Kalzium enthaltenden gerüstbildenden Geopolymeren reagieren.

In einer Ausführungsform können bevorzugt anionische Biotenside eingesetzt werden, die sich auf Grund ihrer Ladung sowie ihrer hydrophilen bzw. hydrophoben Bestandteile spontan in das aus den Geopolymeren gebildete Netzwerk einordnen und dieses stabilisieren. Der Anteil der Biotenside in der Zubereitung kann auf 20 mg/kg Zubereitung begrenzt werden, wodurch die maximale Konzentration im Boden auf die Obergrenze von 20 mg/kg begrenzt wird, so dass toxische Effekte auf das Ökosystem Boden sicher ausgeschlossen werden.

Bei der Herstellung der erfindungsgemäßen Zubereitung verknäulen sich die Geopolymerketten der unterschiedlichen oben genannten Minerale, wobei die Anordnung der Geopolymere und der Biotenside durch koordinative Bindungen und Oberflächenkräfte stabilisiert wird.

Im Verbund besitzt die erfindungsgemäße Zubereitung hydraulische Eigenschaften, die bei der Anwendung der Zusammensetzung in Form von Granalien oder als Beschichtungsmittel zur Härtung der entsprechenden Produkte genutzt wird. Die entstehenden hochvernetzten Geopolymernetzwerke können wegen ihrer hohen Hydrophilie große Mengen an Wasser aufnehmen und speichern. Die erfindungsgemäße Zubereitung quillt in Wasser unter beträchtlicher Volumenzunahme ohne ihren stofflichen Zusammenhalt zu verlieren. In der Trägerstruktur aus verschiedenen mineralischen Komponenten der erfindungsgemäßen Zubereitung beruht die Bindung der Wassermolekülschichten auf van-der-Waals-Kräften, der H-Bindung zwischen den Sauerstoffatomen der Silikatoberflächen und auf der Wirkung des elektrostatischen Feldes zwischen den geladenen Oberflächenstrukturen, Ionen und Wasserdipolen. Dadurch wird das gespeicherte Wasser in pflanzenverträglicher Form zur Verfügung gestellt und auch die Abgabe von Mineralstoffen an das Wurzelsystem kann bedarfsgerecht erfolgen.

Durch das Mineralkomposit der erfindungsgemäßen Zubereitung erfolgt zunächst eine kapillare Aufnahme, Speicherung und Abgabe von Wasser. Weiterhin erfolgt eine Wasseranlagerung an adsorptiv gebundene austauschfähige Ionen (z. B. Ca²⁺, Mg²⁺, Na⁺, K⁺), womit die Wasseraufnahme des Samens gewährleistet ist. In den strukturierten Geopolymeren der erfindungsgemäßen Zubereitung steht ferner zeolithisch gebundenes Wasser in Abhängigkeit der Korngröße für eine längere Zeit in pflanzenverfügbarer Form zur Verfügung. Durch die Anteile an Mixed-Layern wird zusätzlich zur kapillaren Aufnahme Wasser in die Schichtstruktur eingelagert und steht langfristig zur Verfügung, um den Boden feucht zu halten.

Bedingt durch die hohe Quellfähigkeit der verwendeten Geopolymere brechen die aus der erfindungsgemäßen Zubereitung hergestellten Granalien nach Einbringung in den Boden durch das Zusammenwirken von Feuchtigkeit, Bodenmikroorganismen und Pflanzenwurzeln an den smektitischen Zwischenräumen auseinander und vermischen sich mit dem Boden. Dadurch wird sichergestellt, dass auch das Wasser aus den Schichtzwischenräumen der Mixed-Layer langfristig in pflanzenverfügbarer Form zur Verfügung steht. Im Gegensatz zu reinen Tonmineralen wird die Wasserdurchlässigkeit des Bodens durch die erfindungsgemäße Zubereitung bei gleichzeitig verbesserter Wasserspeicherung sogar erhöht, was besonders für die Wasseraufnahme im Wurzelbereich von Bedeutung ist. Durch den Zeolith-Anteil in den strukturbildenden Geopolymeren wird auch bei einer hohen Wasseraufnahme ein für die gute Entwicklung der Wurzeln und der Bodenmikroorganismen ausreichendes Luftporenvolumen.gesichert. Die Gewinnung der für die Keimung benötigten Energie durch Abbau der Reservestoffe über dissimilatorische Prozesse wird nicht gestört. Die höhere Bodendurchlüftung fördert nicht nur das Pflanzenwachstum, sondern ist auch mit einem deutlichen Zuwachs der Bodenbakterien verbunden, die in den Mikroporen der Zubereitung einen geschützten Lebensraum finden. Dadurch wird die Nährstoffumsetzung für die Pflanzen gefördert.

Um die erfindungsgemäße Zubereitung mit dem strukturierten Mineralkomposit herzustellen, ist es erforderlich, alle Komponenten zu dispergieren. Durch ein erfindungsgemäßes Verfahren ist es möglich, auch die Zeolithe zu dispergieren, die sich ansonsten mit Wasser nicht dispergieren lassen. Dazu werden zunächst aus den enthaltenen Mixed-Layer-Tonmineralen Hydrogele hergestellt, die genutzt werden, um Zeolithe zu dispergieren.

Die Mixed-Layer-Tonminerale brechen bei der Dispergierung sowohl entlang der Zwischenschicht-Räume als auch quer zu diesen Schichtebenen auf. Die entstandenen Mixed-Layer-Bruchstücke setzen sich wieder zu neuen Mixed-Layer-Kristallen zusammen und bilden Hydrogele, die stabiler sind als die "Kartenhaus-Strukturen" von Montmorillonit oder Kaolinit. Die "nichtquellfähigen" Schichtanteile innerhalb der Mixed-Layer-Kristalle besitzen innerhalb der Verschlaufungen eine natürliche Stützfunktion, die einen wesentlichen Beitrag zur erhöhten Stabilität der Mixed-Layer-Hydrogel-Suspension leistet. Die Dispergierung der Zeolithe mit den Mixed-Layer-Hydrogel-Suspensionen führt zu einer sterischen Stabilisierung beider Geopolymere, da die Zeolithe in die Netzwerk-Kolloide der Mixed-Layer-Hydrogele eingebettet werden. Innerhalb des Netzwerks finden sich Inhomogenitäten, da sich die Größenverteilung der Zeolithe und der Tonminerale stark unterscheidet. Die Verteilung der Zeolithe in einer Phase dispergierter Mixed-Layer-Hydrogele führt zur Stabilisierung des kolloidalen Zustandes. Durch elektrostatische und sterische Stabilisierung können durch die Einbettung der Zeolithe überraschenderweise auch Tonmineral-Suspensionen stabilisiert werden, die sich thermodynamisch noch nicht im Gleichgewicht befinden.

Bei den eingesetzten Biotensiden kann es sich um amphiphile Biotensid-Alginatpolymer-Komplexe handeln, die mittels in einem Nährmedium gezüchteter Bakterien gewonnen werden. Dazu wird zunächst ein steriles wässriges Nährmedium hergestellt, das mindestens eine assimilierbare Kohlenstoffquelle, mindestens eine assimilierbare Stickstoffquelle und an sich bekannte Nährsalze in geeigneten Konzentrationen enthält. Das so erhaltene Nährmedium wird mit einem Bakterium der Gattung *Pseudomonas* beimpft. Die Züchtung der Bakterien der Gattung *Pseudomonas* erfolgt bei einem pH-Wert im Bereich von 6,5 bis 7,5 und bei einer Temperatur im Bereich von 25 bis 30 °C aerob in bewegter Submers-Kultur. *Pseudomonas aeruginosa* produziert unter limitierenden Wachstumsbedingungen (möglich sind Stickstoff-, Phosphat- oder Eisenlimitierung) in Gegenwart von Ölen Rhamnolipide, die sich in Form eines Rhamnolipid-Alginatpolymer-Komplexes vorteilhaft als Biotenside in den erfindungsgemäßen Zubereitungen verwenden lassen. Nach Abtrennung der Zellen des Bakteriums der Gattung *Pseudomonas* von dem wässrigen Medium auf an sich bekannte Weise, beispielsweise durch Filtration, kann der Biotensid-Alginatpolymer-Komplex aus dem zellfreien wässrigen Medium abgetrennt werden. Da die Aufreinigung eines biotechnologischen Produktes bis zu 60 % der Herstellungskosten ausmachen kann, ist die beschriebene kostenreduzierte Abtrennung wichtig.

Weitere zur Einarbeitung in erfindungsgemäße Zubereitungen geeignete Biotenside sind monomere, dimere oder oligomere Zuckerverbindungen, an die glycosidisch oder esterförmig eine oder mehrere Fettsäuren gebunden sind. Für die Einlagerung in das Geopolymer-Netzwerk sind die Zucker als hydrophiler und die Fettsäuren als hydrophober Molekülbestanteil entscheidend. In Frage kommen beispielsweise Sophoroselipide. Der hydrophile Anteil der Glycolipide besteht aus Sophorose, einem Disaccharid aus zwei β-1,2-verknüpften Glucose-Molekülen, an die glycosidisch eine Hydroxyfett-säure gebunden ist. Besonders bevorzugt sind Alkylsophoroside, bei denen an die Sophorose ein mittelkettiger Fettalkohol geknüpft ist, der besonders gut an das Geopolymer-Netzwerk gebunden werden kann.

In den Geopolymer-Biotensid-Komplex der erfindungsgemäßen Zubereitung kann/können ferner Pflanzenfördermittel wie biologischer Volldünger, vorzugsweise handelsübliches sterilisiertes Tiermehl oder Biodünger, Pflanzenstärkungsmittel, Pflanzenschutzmittel, weitere Pflanzenwuchsstoffe, Bodenverbesserungsmittel, Polysaccharide natürlichen Ursprungs, Huminsäurederivate und Chelatbildner oder Fungizide, bevorzugt auf Chitinbasis, oder eine Kombination der vorgenannten Komponenten eingearbeitet werden. Dies kann erfolgen, in dem Pflanzenkohle mit dieser/n Komponente(n) dotiert wird, und dann die Pflanzenkohle in das von den Geopolymeren gebildete Netzwerk des Geopolymer-Biotensid-Komplexes eingelagert wird. Ferner können in dieses von den Geopolymeren und Biotensiden gebildete Netzwerk weitere biologische und/oder mineralische Dünger und/oder Pflanzenstärkungsmittel und/oder Bodenverbesserungsmittel eingearbeitet werden.

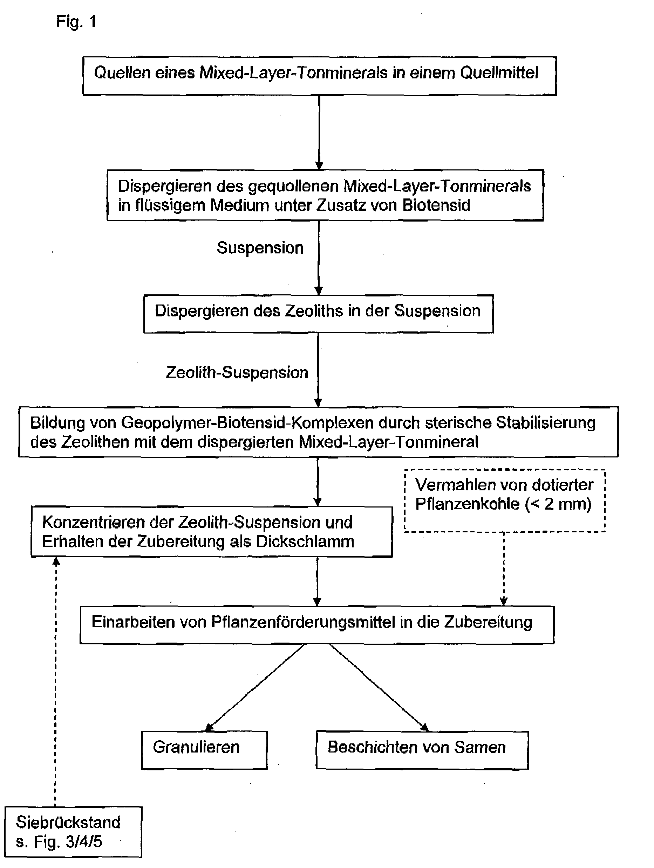

Die Herstellung der erfindungsgemäßen Zubereitung gemäß einer ersten Verfahrensvariante ist in Fig. 1 dargestellt. Zunächst wird das grubenfeuchte oder luftgetrocknete Mixed-Layer-Tonmineral in einem flüssigen Quellmittel (deionisiertes Wasser oder Wasser mit Zusatz von Dispergierhilfsmittel oder Wasser mit Zusatz von Verdickungs- oder Stabilisierungsmittel beispielsweise Quebracho oder Carboxy-Methyl-Cellulose) quellen gelassen und in einem flüssigen Medium, wie etwa Osmose-Wasser, mittels einer Dispergiermaschine dispergiert, woraufhin ein Biotensid, wie beispielsweise der Rhamnolipid-Alginat-Komplex, zugesetzt wird. Gegebenenfalls kann es erforderlich sein, vor der Zugabe des Biotensids die nicht quellfähigen Bestandteile eines Mixed-Layer-reichen Tongesteins abzutrennen. Die mit Biotensid vermischte Suspension wird dann als Dispergiermittel für das Zeolithmineral genutzt. Das verwendete Zeolithgestein wird dabei zuvor auf eine Korngröße unter 2 mm zerkleinert. In der Zeolith-Suspension sind die Geopolymer-Biotensid-Komplexe enthalten, die sich durch sterische Stabilisierung der Zeolithe mit dem dispergierten Mixed-Layer-Tonmineral bilden.

In dem in **Fig.1** gezeigten Beispiel erfolgt eine Konzentrierung der Zeolith-Suspension zu einem Dickschlamm. Gegebenenfalls, und daher durch einen gestrichelten Pfeil angezeigt, kann dies die Zugabe eines Siebrückstands umfassen, der in einer späteren Weiterverarbeitungsstufe erhalten wird. Alternativ oder zusätzlich kann zur Konzentrierung der Zeolith-Suspension auch die Zugabe von trockener Kieselgur und/oder von auf eine Korngröße unter 2 mm gemahlenem biologischen Volldünger erfolgen. Der erhaltene Dickschlamm, der den Geopolymer-Biotensid-Komplex der erfindungsgemäßen Zubereitung enthält, wird für weitere Verarbeitungsschritte zur Herstellung einer gewünschten Applikationsform bereitgestellt.

In den Dickschlamm können gewünschte Pflanzenfördermittel eingearbeitet werden, gegebenenfalls in Form von dotierter Pflanzenkohle, die aus Korngrößen unter 2 mm gemahlen wurde. Die so gewonnene Zubereitung aus mit Pflanzenfördermittel dotierten Geopolymer-Biotensid-Komplexen kann zur Herstellung eines Granulats oder zur Beschichtung von Samen verwendet werden.

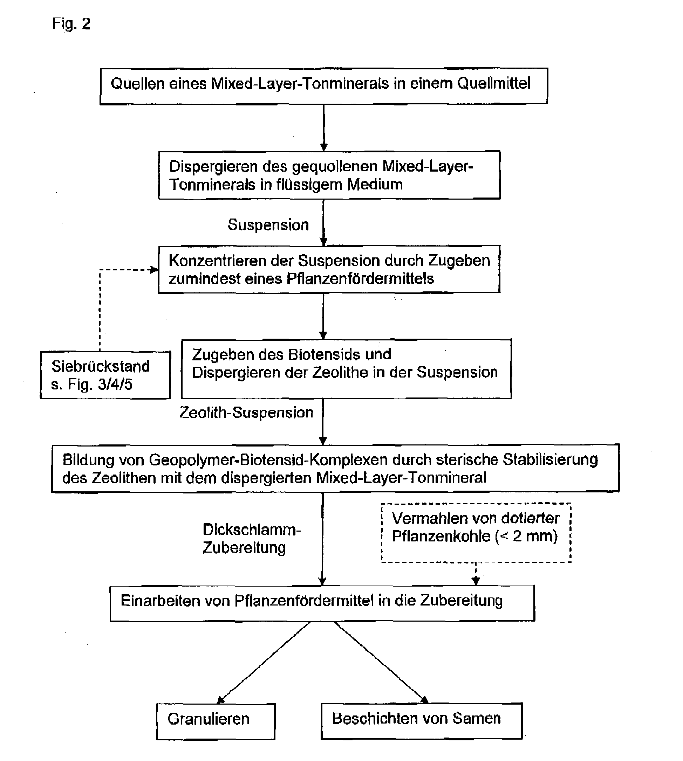

Fig. 2 zeigt eine Variante des erfindungsgemäßen Herstellungsverfahrens, bei dem eine Konzentrierung der Suspension vor der Zugabe des Biotensids erfolgt. Nach der Herstellung der homogenen Mixed-Layer-Tonmineral-Suspension wird als Pflanzenfördermittel das Polysaccharid Chitosan in fester Form eingearbeitet. Es können handelsübliche Pflanzenstärkungsmittel auf Chitosanbasis verschiedener Hersteller eingesetzt werden. Dabei wird die erhöhte Löslichkeit dieser handelsüblichen Mittel in Wasser für die Konzentrierung der Suspension genutzt. Alternativ oder zusätzlich können auch hier wieder Siebrückstände aus späteren Prozessschritten zugesetzt werden. Die Suspension wird unter Rühren mit einem Biotensid wie Rhamnolipid-Alginatpolymer-Komplex vermischt und zur Dispergierung des auf eine Korngröße unter 2 mm gemahlenem Zeolith-Gesteins verwendet. Erhalten wird ein Dickschlamm, der für weitere Verarbeitungsschritte bereitgestellt wird. Auch hier kann die Einarbeitung von Pflanzenfördermitteln durch dotierte Pflanzenkohle erfolgen, die auf Korngrößen unter 2 mm vermahlen wird.

Das Dotieren von Pflanzenkohle zum Einarbeiten von Pflanzenfördermittel eignet sich insbesondere für Tiermehl und auch für in Wasser schwerlösliche Pflanzenfördermittel. Die Dotierung erfolgt, indem Pflanzenkohle und Pflanzenfördermittel gemeinsam vermahlen werden, bis eine Korngröße unter 2 mm erreicht wird. Die zur Dotierung von Pflanzenkohle geeigneten Pflanzenfördermittel umfassen außer Tiermehl schwerlösliche Komponenten wie Pflanzenstärkungsmittel, Pflanzenschutzmittel, Pflanzenwuchsstoffe, Bodenverbesserungsmittel, Huminsäurederivate und Chelatbildner, Fungiziden und Kombinationen davon.

So kann die Herstellung von Granalien mit Tiermehl erfolgen, indem die fein gemahlene, mit Tiermehl dotierte Pflanzenkohle in den Dickschlamm eingearbeitet und in bekannter Weise zu Granalien verarbeitet wird. Dazu können Mischgranulierer, Sprühgranulierer, Granulierteller mit einem Mischwerk eingesetzt werden. Alternativ kann auch der undotierte Dickschlamm zu Granalien verarbeitet werden, auf die in noch feuchtem Zustand in einem weiteren Schritt die dotierte Pflanzenkohle aufgetragen wird. Anstelle von Tiermehl kann die Pflanzenkohle auch mit den oben genannten schwerlöslichen Komponenten dotiert sein.

Gegebenenfalls können beim Einarbeiten der dotierten Pflanzenkohle in die Dickschlamm-Zubereitung auch noch weitere Pflanzenfördermittel, beispielsweise weitere Geopolymere und Düngemittel eingearbeitet werden. Auch die so erhaltene Zubereitung eignet sich zur Herstellung von Granulat und/oder beschichteten Samen.

So kann zur Herstellung von Granalien, die bei der Anwendung Nährstoffe aus dem Boden aufschließen, Dickschlamm mit Präparaten, die Huminsäuren enthalten, homogen vermischt und in bekannter Weise zu Granalien verarbeitet werden. Dazu eignet sich beispielsweise das Präparat Lignohumat B (von AMAGRO s.r.o., Prag 10, Tschechische Republik), bei dem es sich um ein Gemisch von Huminsäuresalzen mit einem hohen Anteil an Fulvinsäuren handelt.

Ein weiteres Beispiel, das im Zusammenhang mit Fig. 2 betrachtet werden kann, ist die Herstellung von Granalien mit biologischem Volldünger. In die homogene Suspension des Mixed-Layer-Tonminerals wird der biologische Volldünger in fester Form eingearbeitet, wobei eine Konzentrierung der Suspension erfolgt, da der Volldünger einen Teil des Wassers aufnimmt. Die konzentrierte Suspension wird unter Rühren mit dem gewünschten Biotensid, z. B. dem Rhamnolipid-Alginat-Komplex vermischt, und zur Dispergierung von auf eine Korngröße unter 2 mm gemahlenem Zeolithgestein verwendet. Der erhaltene Dickschlamm kann anschließend mittels Aufbaugranulierung (Granulierteller, Granuliertrommel, Wirbelschichtgranulator) oder mittels Pressgranulierung (Brikettierwalzen, Tablettpressen, Ringwalzen, Granulierkoller) granuliert werden.

Aus der Dickschlamm-Zubereitung, die den Geopolymer-Biotensid-Komplex enthält, kann in einem Beispiel mit Kieselgur ein Granulat mit Kornfraktion unter 1 mm hergestellt werden. Dazu wird der Dickschlamm schonend auf einen Wassergehalt unter 10 Gew.-% getrocknet und mittels Brecher (z. B. Walzenbrecher, Kreuzschlagbrecher, Hammerbrecher, Backenbrecher) auf Korngrößen unter 1 mm zerkleinert. Anschließend werden Kieselgur und gegebenenfalls weitere Geominerale eingearbeitet.

Ein Beispiel zur Verarbeitung nicht des Dickschlamms sondern der nicht konzentrierten Zeolith-Suspension, die den Geopolymer-Biotensid-Komplex enthält, bezieht sich auf die Herstellung von Pellets mit einer Kornfraktion unter 1 mm mit Kieserit. Kieserit wird trocken mit anderen Geopolymeren, die auch zur Bildung des Mineralkomposits des Geopolymer-Biotensid-Komplexes eingesetzt werden können, im Gewichtsverhältnis von 1:1 bis 1:10 trocken gemischt. Auf einem Pelletier- oder Granulierteller wird das Trockengemisch aufgetragen und mittels der Zeolith-Suspension von 3 Gew.-% bis 20 Gew.-% als Granulierhilfsmittel granuliert. Die erhaltenen Grünpellets mit einem Feuchtegehalt von 8 bis 15 Gewicht.-% werden einem Reifungsprozess von 1 bis 5 Tage unterzogen. Anschließend werden die Grünpellets auf einen Feuchtegehalt unter 5 Gew.-% getrocknet.

Eine weitere Alternative zur Herstellung von Granalien, die beispielsweise Pflanzenstärkungsmittel enthalten, sieht das homogene Vermischen des Dickschlamms mit weiteren Naturprodukten vor. Anstelle des üblicherweise für die Granulierung benötigten Wassers wird eine wässrige Lösung eines fungalen Biopolymerkomplexes, der durch alkalischen Aufschluss aus den Zellwänden aphyllophoraler Basidiomyceten gewonnen wurde (zur Verfügung gestellt von Forschungsinstitut Biopol e.V. Berlin) eingesetzt. Dieser Komplex wird unter der Bezeichnung Lucosan von der Aglycon Mycoton GmbH (Luckenwalde, Deutschland) als Pflanzenstärkungsmittel eingesetzt. Anstelle dieses Komplexes können auch weitere Extrakte aphyllophoraller Basisdiomyceten, die Chitin, 1.3 ß Glucan, Melanin und/oder Chitosan enthalten, sowie weitere lösliche Pflanzenstärkungsmittel eingesetzt werden und der Dickschlamm in bekannter Weise zu Granalien verarbeitet, beispielsweise unter Einsatz eines Mischgranulierers, Sprühgranulierers oder eines Granuliertellers mit einem Mischwerk.

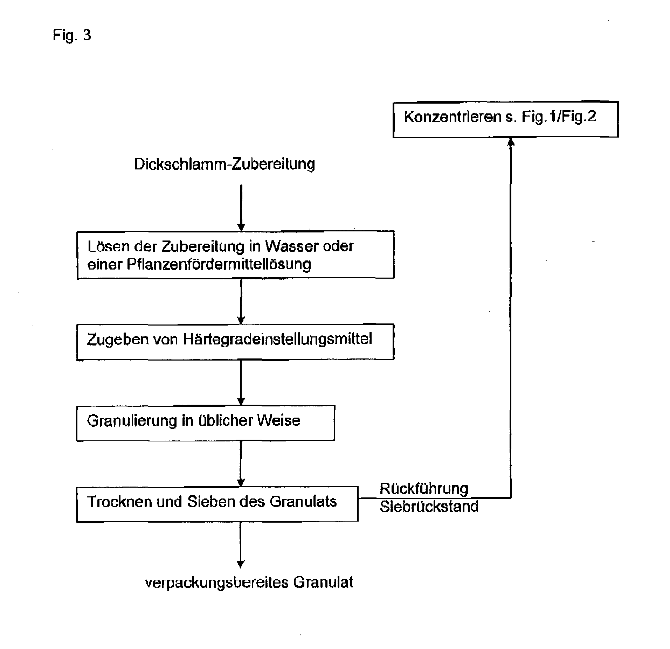

In **Fig. 3** ist das die Zubereitung weiterverarbeitende Verfahren zur Herstellung eines granulierten Bodenverbesserungsmittels skizziert. Die erfindungsgemäß hergestellte Zubereitung aus dem Pflanzenfördermittel enthaltenden Geopolymer-Biotensid-Komplex wird mit Wasser oder mit einer wässrigen Lösung eines oder mehrerer Pflanzenfördermittel wie in dem vorigen Beispiel eines wasserlöslichen Pflanzenstärkungsmittels und/oder eines Pflanzenschutzmittels und/oder eines weiteren Pflanzenwuchsstoffs in üblicher Weise granuliert. Der für die Verwendung als Bodenverbesserungsmittel notwendige Härtegrat wird durch ein Härtegradeinstellungsmittel erreicht. Das granulierte Produkt wird getrocknet, gesiebt und abgepackt. Die Siebrückstände können in den Prozess zur Konzentrierung der Suspension zurückgeführt werden.

Zur Härtung der Granalien wird der Dickschlamm entsprechend der Härteanforderungen mit Kieserit gemischt, so dass ein Gewichtsverhältnis von Kieserit zu Dickschlamm von 1:1 bis 1:10 vorliegt. Das so erhaltene Gemisch wird im Mischbehälter mindestens 10 Minuten intensiv gerührt. Das erhaltene Granulatgemisch kann sprühgetrocknet oder mit einem anderen Trockner (Bandtrockner, Wirbelschichttrockner) auf einen Restwassergehalt von 1 Gew.-% bis 15 Gew.-% bei Temperaturen von 50° C bis 200 °C getrocknet und das Trockengut anschließend auf die geforderte Korngrößenverteilung gebrochen werden.

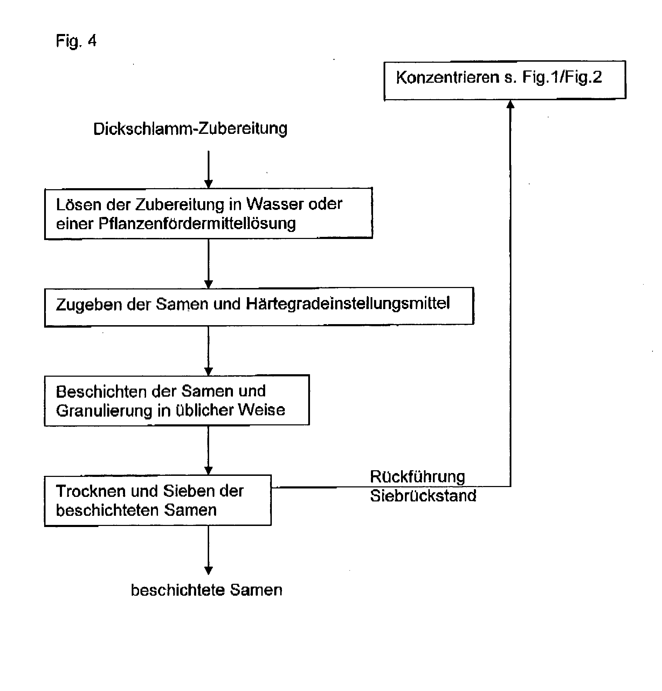

Die Herstellung von beschichteten Samen ist in **Fig. 4** zu sehen, wobei die erfindungsgemäße Zubereitung mit Wasser oder mit einer wässrigen Lösung eines oder mehrerer Pflanzenfördermittel zusammen mit den zu beschichtenden Samen in üblicher Weise granuliert wird, wobei der für die zur Keimungsunterstützung notwendige Härtegrad durch den gewählten Anteil eines Härtegradeinstellungsmittels im Verhältnis zu der erfindungsgemäßen Zubereitung bestimmt wird. Die beschichteten Samen werden nach Abschluss des Granuliervorgangs getrocknet und abgesiebt. Dieses Samengranulat kann nun abgepackt oder weiterbehandelt werden, während der abgesiebte Rückstand in den Prozess zurückgeführt und zum Konzentrieren der Suspension verwendet werden kann.

Zur Einstellung des Härtegrads des Beschichtungsmaterials wird auch hier der Dickschlamm entsprechend der Härteanforderungen mit Kieserit gemischt, so dass ein Gewichtsverhältnis von Kieserit zu Dickschlamm von 1:1 bis 1:10 vorliegt. Das so erhaltene Gemisch wird im Mischbehälter mindestens 10 Minuten intensiv gerührt und dann nach einer Verweilzeit von ca. 2 Stunden als Pilliermittel für die Beschichtung genutzt.

In einer alternativen Weiterverarbeitung des Dickschlamms mit dem zu behandelnden Samen kann eine quellfähige, wasser- und nährstoffspeichernde Schicht auf den Samen hergestellt werden. Die beschichteten Samen können durch Sprühgranulierung oder Wirbelschichttrocknung hergestellt werden, die getrocknet, gesiebt und abgepackt werden.

Alternativ oder zusätzlich können dem Dickschlamm, um die Klebefähigkeit zu erhöhen, Polysaccharide natürlichen Ursprungs wie Stärke, Dextrin, Pektin, Zellulose, Karrageen, Alginate oder Mischungen dieser Stoffe zugesetzt werden.

Um ein Beschichtungsmaterial mit fungizider Wirkung herzustellen, kann ein fungizides Beizmittel in der vom Hersteller vorgeschriebenen Konzentration in den Dickschlamm eingearbeitet werden.

Beispielsweise wurde pilzinfizierter Samen von Arzneifenchel mit einer Dickschlamm-Zubereitung, die ein Pflanzenstärkungsmittel auf Chitosanbasis enthält, beschichtet. Zusätzlich erfolgte eine fungizide Ausrüstung des beschichteten Samens durch Granulierung mit einer wässrigen Lösung eines Chitosanhaltigen Pflanzenstärkungsmittels.

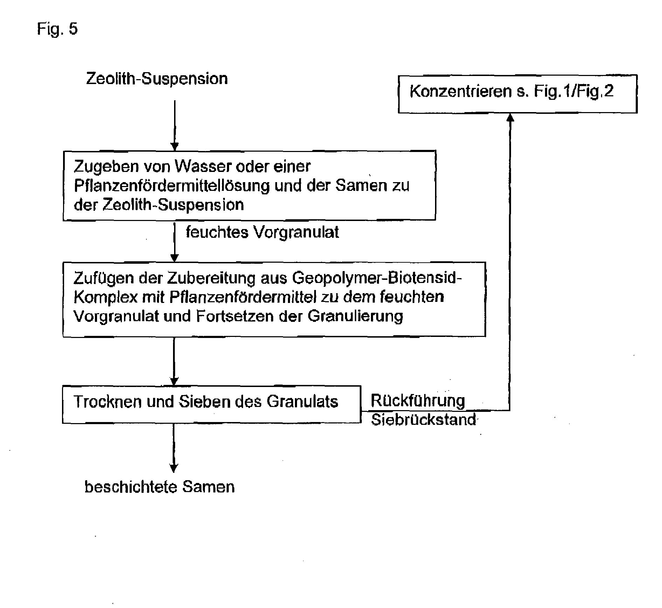

Ein alternatives Verfahren zum Beschichten von Samen ist in Fig. 5 abgebildet. Hierbei wird zu der Zeolithdispersion mit dem gebildeten Geopolymer-Biotensid-Komplex der zu behandelnde Samen mit Wasser oder mit einer wässrigen Lösung ein oder mehrere Pflanzenfördermittel gegeben und in üblicher Weise coatiert/granuliert. Dem dabei erhaltenen noch feuchten Vorgranulat wird die erfindungsgemäße Zubereitung aus mit Pflanzenfördermitteln dotiertem Geopolymer-Biotensid-Komplex zugefügt und die Coatierung/Granulierung fortgesetzt. Die weiteren Schritte des Trocknens und Siebens sowie des Abpackens oder Weiterverarbeitens entsprechen dem in Verbindung mit **Fig. 4** beschriebenen Verfahren.

Die mit der erfindungsgemäßen Zubereitung beschichteten Samen oder die daraus hergestellten Bodenverbesserungsgranalien können auch noch nachträglich, also nach dem Trocknen, in einem Weiterverarbeitungsschritt dotiert werden. Dabei werden weitere Pflanzenfördermittel wie lösliche Bodenhilfsstoffe, Pflanzenstärkungsmittel oder Pflanzenschutzmittel, insbesondere Fungizide, aufgesprüht und durch die Geopolymere und/oder die eingearbeitete Pflanzenkohle absorbiert. Als Lösungsmittel für diese Pflanzenfördermittel können sowohl Wasser als auch leicht flüchtige Lösungsmittel wie beispielsweise alkoholische Lösungen der Pflanzenwirkstoffe verwendet werden.

Die erfindungsgemäße Zubereitung kann als die Bodenstruktur verbesserndes Mittel im Pflanzenbau genauso wie zur Erhöhung der Gebrauchseigenschaften bei Zierrasen eingesetzt werden. Die erfindungsgemäße Zubereitung eignet sich gleichermaßen zur Herstellung eines Granulats zur Ausbringung auf den Boden wie zur Beschichtung von Samen. Der Pflanzensamen wird dabei mit einer dünnen, aber fest haftenden Schicht überzogen. Durch entsprechende Dotierung kann die erfindungsgemäße Zubereitung zur Pilzbekämpfung im Pflanzenbau verwendet werden. Durch die mögliche Einstellbarkeit bzw. Anpassbarkeit der Darreichungsform der Zubereitung eignet sich die erfindungsgemäße Zubereitung auch zum Einsatz im Präzisionsackerbau und in der Forstwirtschaft.

Die erfindungsgemäße Zubereitung stimuliert das Pflanzenwachstum und führt zu einer signifikanten Zunahme der Biomasse, wenn sie als Bodenverbesserungsmittel in den Boden eingearbeitet wird. Überraschenderweise wird das Pflanzenwachstum in besonderer Weise gefördert, wenn die Zubereitung zum Beschichten von Samen eingesetzt wird. Nach dem Einbringen in den Boden quillt die Beschichtungsschicht des Samens durch Wasseraufnahme auf, so dass die Samen von einem Geopolymer-Biotensid-Wasserfilm umgeben sind. In diesem Geopolymer-Biotensid-Wasserfilm, dessen Dicke entscheidend für die günstigen Bedingungen bei der Keimung ist, befinden sich gelöste Nährstoffe. Ein Wassergehalt von 40 bis 60 % in der Umgebung des Saatgutes ist für die Keimung optimal. Zu Beginn der Keimung bricht als erstes die Wurzelanlage durch die Samenschale, die sofort mit der Wurzelbildung beginnt und damit den Keimling im Boden verankert. Diese Phase wird durch die in der erfindungsgemäßen Zubereitung enthaltenen Biotenside besonders gefördert.

Die erfindungsgemäße Zubereitung weist durch die enthaltenen Geopolymere einen hohen Anteil an adsorptiv gebundenem Calcium, Magnesium, Kalium und Natrium auf. Diese werden durch Wasser langsam abgelöst und dienen als Nährstoffangebot für den Keimling. Sie wirken daher keimstimulierend. Die Aufnahme der Mineralstoffe vollzieht sich dabei in zwei Schritten:
- Bereits während der Keimungsphase erfolgt eine Absorption von sofort für die Pflanze verfügbar im Wasser gelösten Ionen.
- Anschließend erfolgt eine Austauschabsorption der an dem Mineralkomposit sorbierten Nährstoffionen: Durch die Abgabe von Wasserstoffionen und Hydrogenkarbonat, den Dissoziationsprodukten des Atmungs-Kohlendioxids in Wasser, fördert die Pflanze den Ionenaustausch an den Teilchen des Mineralkomposits. Dadurch gehen die Nährstoffionen in Lösung und können damit aufgenommen werden.

Eine erhöhte Keimrate kann erreicht werden, wenn die Menge der für die Pflanze sofort verfügbaren Düngerstoffe in der Umgebung des Samens erhöht wird, wobei eine Konzentration von 0,5 g/l nicht überschritten werden sollte. Erfindungsgemäß wird dies erreicht, indem in das von den Geopolymeren gebildete Netzwerk Pflanzenkohle eingelagert wird, die zuvor mit einem biologischen Volldünger, vorzugsweise mit handelsüblichem sterilisiertem Tiermehl oder Biodünger, dotiert wurde. Durch die Pflanzenkohle wird die Aufnahme- und Speicherfähigkeit für Mineraldünger und/oder biologischen Volldünger erhöht. Bedingt durch die hohe Adsorptionskraft der Pflanzenkohle werden die gespeicherten Nährstoffe aber nur langsam und bedarfsgerecht mit dem aufgenommenen Wasser an das Wurzelwerk abgegeben.

Neben der Dotierung mit biologischem Volldünger kann die hohe Adsorptionskraft der Pflanzenkohle erfindungsgemäß auch dazu genutzt werden, dass die Pflanzenkohle vor dem Einbau in das von den Geopolymeren gebildete Netzwerk mit einem Pflanzenstärkungsmittel und/oder einem Pflanzenschutzmittel und/oder einem weiteren Pflanzenwuchsstoff und/oder einem Bodenverbesserungsmittel und/oder Fungiziden, vorzugsweise Fungiziden auf biologischer Basis wie Derivaten des Chitins, dotiert wird. Dadurch können an verschiedene Pflanzen und Aufgabenstellungen angepasste Mittel zur Verfügung gestellt werden, die das Pflanzenwachstum nachhaltig fördern. Durch die optionale Dotierung mit Huminsäuren und Chelatbildnern wird die Mobilisierung von chemisch gebundenen Nährstoffvorräten unterstützt: Die dissoziierten Säuren lösen Nährstoffe sowohl aus dem Mineralkomposit als auch aus den im Boden vorhandenen Mineralen.

Nicht nur die optional eingearbeitete Pflanzenkohle, auch die Geopolymere der erfindungsgemäßen Zubereitung an sich weisen eine hohe Absorptionskraft auf, so dass in das von den Geopolymeren gebildete Netzwerk biologische und/oder mineralische Dünger und/oder Bodenverbesserungsmittel auch ohne den Hilfsstoff Pflanzenkohle eingearbeitet werden können. Dabei werden in die durch die Geopolymere gebildeten Netzwerkstrukturen Komponenten des Tiermehls und/oder der Pflanzenstärkungsmitttel und/oder fein verteilte Pflanzenkohle eingelagert.

Die erfindungsgemäße Zubereitung zeichnet sich außerdem durch eine hohe Aufnahme- und Speicherfähigkeit für biologische Volldünger aus. So kann eine erfindungsgemäße Zubereitung mit oder ohne feingemahlene Pflanzenkohle mit einem biologischen Volldünger dotiert werden.

Insbesondere wird durch das erfindungsgemäße Verfahren, bei dem Tiermehl als Pflanzenfördermittel mit oder ohne Pflanzenkohle in den Geopolymer-Biotensid-Komplex eingelagert wird, eine hygienisch unbedenkliche Verwertung von Tierkörperabfällen ermöglicht, und es kann der hohe Anteil des Tiermehls an pflanzenverfügbarem Stickstoff sowie an den zunehmend knapp werdenden Phosphaten ausgenutzt werden.

Auf diese Weise eingelagert, kann Tiermehl in den entsprechenden aus der Zubereitung geschaffenen Präparate sowohl zu Beschichtungsmaterial für Samen als auch zu die Bodenstruktur verbessernde Mittel im Pflanzenbau, insbesondere zur Ertragssteigerung beim Anbau von Zwischenfrüchten sowie zur Erhöhung der Gebrauchseigenschaften bei Zierrasen eingesetzt werden.

Mit der erfindungsgemäßen Zubereitung ist es überraschend erstmals möglich, eine stabile Beschichtung von Samen mit Tiermehl vorzunehmen, das selbst schlecht auf Pflanzensamen haftet.

Bei der Verarbeitung der erfindungsgemäßen Zubereitung zu granulierten Bodenverbesserungsmitteln können unterschiedliche Härtegrade und unterschiedliche Korngrößen eingestellt werden, so dass die Ausbringung mit herkömmlichen Düngerstreuern unproblematisch ist. Eine Staubentwicklung bei der Ausbringung, die die Verwendung von Tiermehl als Düngemittel bisher stark eingeschränkt hat, wird sicher ausgeschlossen.

Die erfindungsgemäße Zubereitung besitzt durch die verwendeten Geominerale und gegebenenfalls auch durch die in das Netzwerk eingebaute Pflanzenkohle ein hohes Adsorptionsvermögen, so dass weitere Komponenten wie beispielsweise Pflanzenstärkungsmittel angelagert werden können. Für lösliche Stoffe bietet es sich an, diese bereits als wässrige Lösung zur Granulierung anstelle des üblicherweise verwendeten Wassers einzusetzen.

Bei der Verwendung der erfindungsgemäßen Zubereitung zur Herstellung von beschichtetem Saatgut kann die Beschichtung vorteilhaft unmittelbar nach der Ernte erfolgen, so dass bei trockener Lagerung die Qualität des Saatgutes erhalten bleibt, während die Vermehrung von Pilzen und Bakterien eingeschränkt wird. Nach der Aussaat bricht die am Samen haftende Schicht bedingt durch die hohe Quellfähigkeit der verwendeten Geopolymere nach Einbringung in den Boden durch die Aufnahme von Feuchtigkeit an den smektitischen Zwischenräumen auseinander und vermischt sich mit dem Boden. Die verwendeten strukturbildenden wasserspeichernden Geopolymere sichern bei der Keimung und den ersten Wachstumsphasen eine ausreichende Wasserversorgung ohne die Bodenporen zu verstopfen.

Überraschenderweise wurde gefunden, dass mit der erfindungsgemäßen Zubereitung, die als Biotensid amphiphile Biotensid-Alginatpolymer-Komplexe enthält und als Samenbeschichtung eingesetzt wird, bereits bei Konzentrationen unter 20 mg Biotensid/kg Beschichtungsmaterial eine Steigerung der Wurzel- und Blattmasse nicht nur bei Leguminosen sondern auch bei zur Gründüngung eingesetzten Gräsern erreicht wird, d. h. die dünne, beim Beschichten erzeugte Schicht führt bereits zu einer signifikanten Steigerung der Biomasse.

Da bei Konzentrationen über 20 mg Biotensid/kg Bodenmasse toxische Effekte auf die im Boden lebenden Organismen nicht mehr sicher ausgeschlossen werden können, kann durch das Beschichten des Saatgutes mit einer erfindungsgemäßen Zubereitung sicher gewährleistet werden, dass die Konzentration des Biotensids von 20 mg/kg Bodenmasse an keiner Stelle überschritten wird.

Da aus Tiermehl stammender pflanzenverfügbarer Stickstoff sowie Phosphat durch die Beschichtung des Samens in unmittelbarer Wurzelnähe gespeichert werden, stehen den Pflanzen diese essentiellen Nährstoffe bereits in den ersten Wachstumsphasen in ausreichendem Maße zur Verfügung. So wird eine hygienisch unbedenkliche Verwertung von Tierkörperabfällen ermöglicht und der hohe Anteil an pflanzenverfügbarem Stickstoff sowie an Phosphaten optimal ausgenutzt.

Im Falle von Grassamen wird durch die Beschichtung bei der Anlage von Rasenflächen zudem das Auswehen des Rasens und Vogelfraß vermindert, da sich das gecoatete Saatgut schnell und intensiv mit dem Boden verbindet. Das gleichmäßige Ausbringen des Rasens wird gefördert, der Pflegeaufwand vermindert.

Darüber hinaus ermöglicht die erfindungsgemäße Zubereitung aus Geopolymeren, Biotensiden mit Fungiziden und Tiermehl spezielle Anwendungen im Pflanzenbau. Die Beschichtung des Saatgutes mit der erfindungsgemäßen Zubereitung ist eine bisher nicht bekannte Möglichkeit zur Schadensbegrenzung, um wichtige Krankheiten bei Getreide, bei Gemüse sowie Arznei-und Gewürzpflanzen, die vollständig oder teilweise saatgutübertragbar sind, einzudämmen.

Auch im Anwendungsfall der erfindungsgemäßen Zubereitung mit an die Geopolymere gebundenen Biotensiden und anschließender Dotierung als Granalien zur ökologischen Ertragssteigerung im Pflanzenbau werden Vorteile wie die Nutzung von Tiermehl in hygienisch einwandfreier Weise erreicht. Bedingt durch die hohe Quellfähigkeit der verwendeten Geopolymere brechen die Granalien nach Einbringung in den Boden durch das Zusammenwirken von Feuchtigkeit, Bodenmikroorganismen und Pflanzenwurzeln an den smektitischen Zwischenräumen auseinander und vermischen sich mit dem Boden. Die Biotenside fördern das Pflanzenwachstum, werden aber innerhalb einer Kulturperiode vollständig biologisch abgebaut. Die Geopolymere verbleiben langfristig im Boden und bewirken beim wiederholten Einsatz eine stetige Verbesserung der Bodenstruktur. Auch die optional enthaltene Pflanzenkohle verbleibt langfristig im Boden und bildet gleichzeitig eine CO₂-Senke. Durch das Einbringen der erfindungsgemäßen Zubereitung in den Boden wird dessen Krümelstruktur stabilisiert. Das zeolithisch gebundene Wasser steht in dieser Krümelstruktur für eine längere Zeit in pflanzenverfügbarer Form zur Verfügung. Durch die verbesserte Bodenstruktur wird zudem für eine ausreichende Belüftung gesorgt. Die Zwischenräume füllen sich reichlich mit Luft, die für die Pflanzenwurzeln sowie für Bodenmikroorganismen und die Bodenfauna unentbehrlich sind. Geopolymere und Pflanzenkohle, die verstärkt Ammoniumionen binden, speichern den pflanzenverfügbaren Stickstoff; andere in der Zubereitung enthaltene Geopolymere sowie Pflanzenkohle verhindern auch das Auswaschen von weiteren Pflanzenwuchsstoffen. Die Biotenside fördern das Pflanzenwachstum und bewirken eine signifikant höhere Biomasse. Die erfindungsgemäße in den Boden eingebrachte Zubereitung greift regulierend in den Wasserhaushalt ein und führt zu einem Gleichgewicht, wenn die Wasserversorgung der Kulturpflanzen Schwankungen, etwa den jahreszeitlich bedingt auftretenden Spitzen und Defiziten, unterliegt.

Eine weitere besonders vorteilhafte Anwendung der erfindungsgemäßen Zubereitung ergibt sich beim Zwischenfruchtanbau. Mit Hilfe der Gründüngung wird über eine intensive Durchwurzelung eine Stabilisierung der nach der mechanischen Lockerung zunächst noch sehr verdichtungsempfindlichen Bodenstruktur erzielt. Dies erfolgt einerseits durch den Verbau der Bodenfragmente durch die Wurzeln, andererseits stellen diese und die später eingearbeitete Blattmasse die Nährstoffversorgung für das Bodenleben dar. Vorteilhaft wirkt sich die Erhöhung der Biomasse des Gründungs, wie sie durch die erfindungsgemäße Zubereitung erreicht wird, stabilisierend auf die Struktur des Bodens aus und die Umwandlung der Gründung-Biomasse zu Kompost wird durch die Rhamnolipidbiotenside aus *Pseudomonas* sp. gefördert. Ferner wird die Bildung von pflanzenverfügbarem Stickstoff durch Leguminosen gefördert und der Geopolymer-Komplex verhindert das Auswaschen des gebildeten pflanzenverfügbaren Stickstoffs während des Winters.

So kann durch das Beschichten der Samen mit der erfindungsgemäßen Zubereitung für den Zwischenfruchtanbau eine weitgehend natürliche Düngung mit äußerst positiven Auswirkungen auf die Bodenaktivität, Bodengesundheit und Ertragskapazität erreicht werden.

Ferner kann insbesondere beim Anbau von Leguminosen als Zwischenfrucht durch Anwendung der erfindungsgemäßen Zubereitung vorteilhaft erreicht werden, dass im Boden Wasser in ausreichendem Maß zusammen mit darin gelösten Nährstoffen, beispielsweise aus dem Tiermehl, zur Verfügung steht. Die Biotenside wirken bei der Stimulierung der Stickstoffbindung mit den Geopolymeren synergistisch zusammen. Ein von den Mikroorganismen für die Stickstofffixierung benötigter ausreichender Wassergehalt kann so gesichert werden und es kann vermieden werden, dass die mikrobiellen Prozesse zum Erliegen kommen, wie es bei Wassergehalten unter 20 % geschieht, und auch, dass die Aufnahme und der Transport von Nährstoffen bei einem zu niedrigen Wassergehalt im Boden (< 30 %) erschwert sind.

Ist Pflanzenkohle in der erfindungsgemäßen Zubereitung enthalten, kommt vorteilhaft hinzu, dass die Pflanzenkohle - wenn überhaupt - nur sehr langsam abgebaut wird und so das ursprünglich von Pflanzen beim Zwischenfruchtanbau assimilierte CO₂ langfristig der Atmosphäre entzogen wird. So hat die erfindungsgemäße Zubereitung das Potential zur klimaneutralen Landwirtschaft ("Klimafarming") beizutragen, während die von den Pflanzen aufgenommenen Nährstoffe vollständig an den Boden zurückgegeben werden.

Eine Bodenverbesserung mit der erfindungsgemäßen Zubereitung in Form von Granalien vor dem Einsäen von Rasen erhöht die Strapazierfähigkeit und vermindert den Pflegeaufwand, insbesondere die erforderliche Gießhäufigkeit.

Selbstverständlich können Granalien aus der erfindungsgemäßen Zubereitung und mit der erfindungsgemäßen Zubereitung beschichtete Samen auch kombiniert angewendet und gemeinsam auf einer Fläche genutzt werden.

Während beim Beschichten der Samen die Menge der Geopolymere durch die Schichtdicke begrenzt ist, ist bei der Ausbringung der erfindungsgemäßen Zubereitung in Form von Granalien die Menge frei wählbar und kann an die Bodentypen angepasst werden, d. h. bei leichten Sandböden kann eine größere Menge Granalien als auf schweren Tonböden ausgebracht werden. Während zu Beginn bei der Keimung die Beschichtung der Samen für ausreichend Wasser und Nährstoffe sorgt, wird in den späteren Wachstumsphasen die Speicherung von Wasser und Dünger durch die in Granulatform eingebrachten mit Dünger dotierten Biotensid-Geopolymer-Komplexe erreicht. So erfolgt unabhängig von der Stimulierung der Keimung eine Verbesserung der Bodenstruktur. Sowohl beim ersten als auch beim wiederholten Einsatz der erfindungsgemäßen Zubereitung werden durch reversible Quellung und Aufnahme durch die Pflanzen und Verdunstung im Boden Zwischenräume für eine gute Durchlüftung und einen ungehinderten Zufluss von Nährstoffen geschaffen. Dadurch wird das Ökosystem Boden durch die Verbesserung der Bodengare gefördert. Die beim wiederholten Einsatz langfristig verbesserte Krümelstruktur ist Voraussetzung für das Vorliegen einer arten- und individuenreichen Organismenpopulation, die langfristig hohe Erträge verspricht.

Ziele bei der Anwendung im Präzisionsackerbau sind, bei der Ausbringung Unterschiede des Bodens und der Ertragsfähigkeit innerhalb eines Feldes zu berücksichtigen und diese Unterschiede zumindest langfristig zu beseitigen. Dazu wird die erfindungsgemäße Zubereitung in Form von Granalien verstärkt auf Stellen ausgebracht, bei denen innerhalb eines Schlages mit geringer Ertragsfähigkeit gerechnet wird. Andererseits soll durch den Präzisionsackerbau ein Ausschwemmen von Dünger verhindert werden. Das wird bei der Verwendung von beschichtetem Saatgut dadurch unterstützt, dass die Nährstoffe unmittelbar im Wurzelbereich gespeichert werden. Deshalb ist die Kombination von Präzisionsackerbau und gezielter Bodenverbesserung mit erfindungsgemäßen Zubereitungen besonders vorteilhaft.

Im Folgenden wird die Erfindung anhand von Ausführungsbeispielen erläutert, ohne den Schutzumfang auf diese Beispiele zu beschränken. Dabei können einzelne Merkmale der Erfindung jeweils für sich allein oder zu mehreren in Form von Kombinationen vorteilhafte schutzfähige Ausführungen darstellen, die unter den Schutzumfang fallen.

### Beispiel 1: Einfluss auf morphometrischen Parameter von Lolium perenne L. (Deutsches Weidelgras)

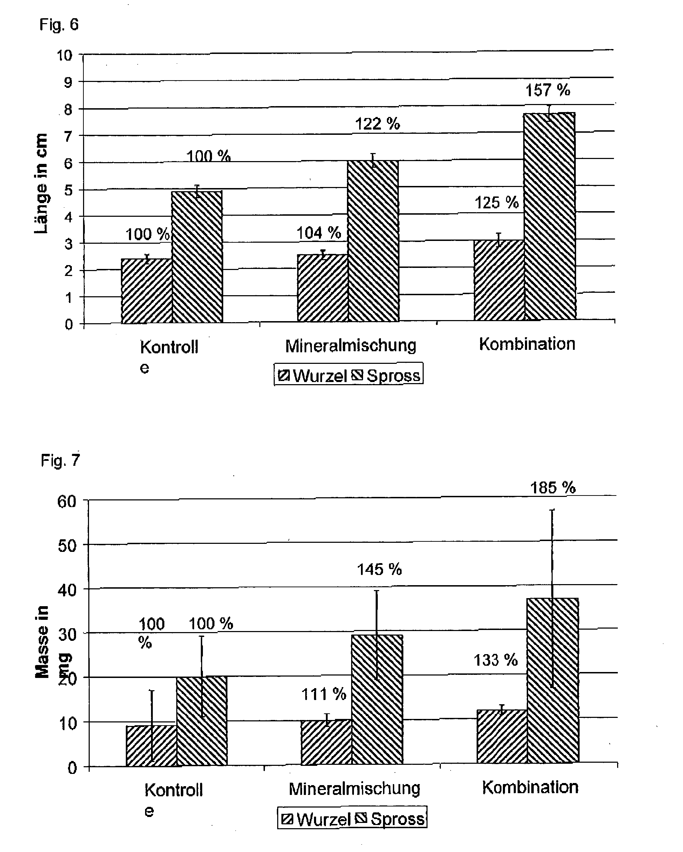

Bereits das Mineralkomposit mit den Geopolymeren Mixed-Layer-Tonmineral und Zeolith im Verhältnis 1:1 verbessert das Pflanzenwachstum signifikant wie in **Fig. 6** zu sehen ist, die das Längenwachstum von *Lolium perenne L.* unter dem Einfluss der Geominerale und der Kombination von Geomineralen und Biotensiden zeigt. Der Effekt wird durch die Kombination der Geopolymere mit dem Rhamnolipid-Alginat-Komplex verstärkt. Da nicht nur das Längen- sondern auch das Dickenwachstum erhöht wird, zeigt sich der positive Effekt der Kombination bei der Massezunahme besonders deutlich. **Fig. 7** zeigt die Massezunahme von *Lolium perenne L* unter dem Einfluss der Geominerale und der Kombination von Geomineralen und Tensiden. Das Deutsche Weidelgras bevorzugt mittlere Bodenfeuchten, die mit den erfindungsgemäßen Produkten wassersparend erreicht werden können. Das Deutsche Weidelgras ist nicht nur Bestandteil von zahlreichen Zier- und Sportrasenmischungen sondern kann als Zwischenfrucht auch direkt zur Verbesserung der Bodenstruktur beitragen. Da bei Gründüngung die dem Acker zugeführte Biomasse aus Blättern und Wurzeln besteht, wird durch die Kombination die zugeführte Biomasse um etwa das 1,7-fache erhöht. Bei Zier- und Sportrasen führt die erhöhte Wurzeldichte u. a. zu einer verbesserten Belastbarkeit.

### Beispiel 2: Einfluss auf Pflanzeninhaltsstoffe

Nachfolgende Tabelle 1 zeigt, dass die Kombination aus Geopolymeren und Biotensiden keinen Einfluss auf die untersuchten Pflanzeninhaltsstoffe hat. Weder die Gesamtmenge der Pigmente noch einzelne Inhaltsstoffe mit Ausnahme einer leichten Erhöhung bei Carotinoiden werden durch die Vorbehandlung der Pflanzensämlinge signifikant verändert.

**Tab. 1: Einfluss einer Vorbehandlung des Saatgutes mit einer Kombination von Geomineralen und Biotensiden auf ausgewählte Pflanzeninhaltsstoffe**

| Varianten | Chlorophyll A | | Chlorophyll B | | Carotinoide | | Gesamtgehalt an Pigmenten | |
|---|---|---|---|---|---|---|---|---|
| | mg/l | % | mg/l | % | µg/l | % | mg/l | % |
| Kontrolle | 0,648 | 100 | 0,467 | 100 | 0,41 | 100 | 1,114 | 100 |
| Kombination | 0,628 | 97 | 0,476 | 102 | 0,52 | 127 | 1,104 | 99 |

### Beispiel 3: Einsatz der erfindungsgemäßen Zubereitung in der Pflanzenproduktion (Freilandversuche mit Rosen)

Grubenfeuchtes Mixed-Layer-reiches Tongestein wird mittels einer Dispergiermaschine und Zugabe von Osmose-Wasser in eine homogene Suspension überführt und die nicht quellfähigen Bestandteile größtenteils abgetrennt Ein Pflanzenstärkungsmittel auf Chitosanbasis wird in fester Form eingearbeitet und die Suspension durch die erhöhte Löslichkeit konzentriert. Die Suspension wird unter Rühren mit einem Rhamnolipid-Alginatpolymer-Komplex vermischt. Mit dieser Suspension erfolgt die Dispergierung von auf eine Korngröße < 2 mm gemahlenem Zeolith-Gestein, so dass ein Dickschlamm erhalten wird. 30 g dieses Dickschlamms wurden in 10I Wasser suspendiert. Die Rosen (Sorte: Gruß aus Heidelberg) wurden vor dem Pflanzen 1 h darin eintaucht, die restliche Suspension wurde ins Pflanzloch geben. Als Ergebnis zeigte sich, dass auch auf magerem Sandboden besonders guter Wuchs der Rosen trotz verringerter Gießhäufigkeit erzielt werden konnte.

### Beispiel 4: Ermittlung ökotoxikologischer Grenzwerte am Modellorganismus Saccharomyces cerevisiae

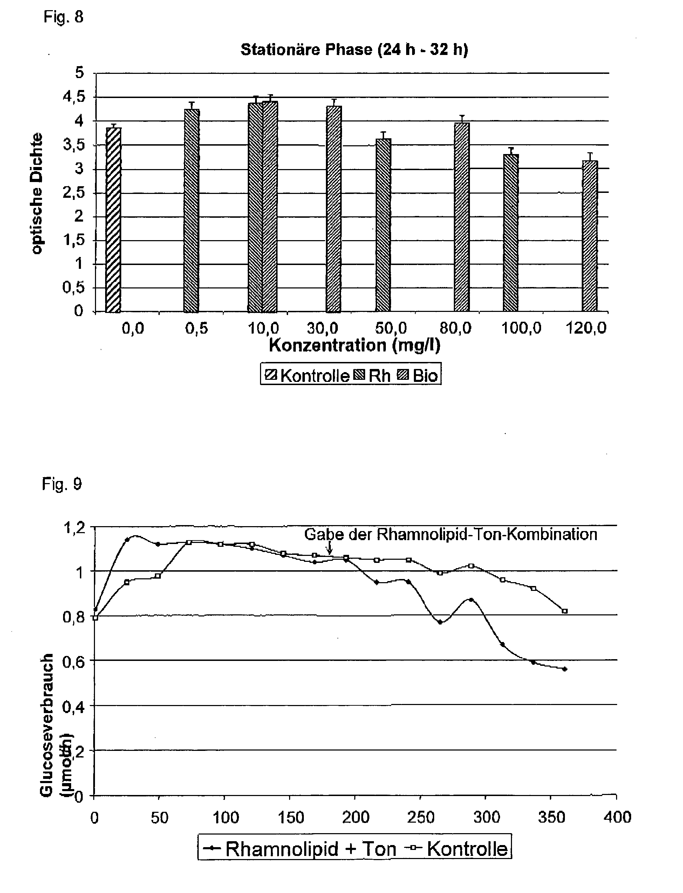

**Fig. 8** zeigt das Wachstum von *Saccharomyces cerevisiae* in der stationären Phase (Mittelwert von 5 Messungen im Abstand von 2 h) unter dem Einfluss der Biotenside Rhamnolipide (Rh) und Rhamnolipid-Alginat-Komplex (Bio). In den Konzentrationen von 0,5 bis 20 mg Rhamnolipid/l ist ein fördernder Effekt auf das Wachstum von *Saccharomyces cerevisiae* zu erkennen. In höheren Konzentration 30 -100 mg/l sinkt das Zellwachstum unter den für die Kontrolle ermittelten Wert.

### Beispiel 5: Ermittlung ökotoxikologischer Grenzwerte durch den Leuchtbakterien-Test

Im Leuchtbakterien-Test wurde für den Biokomplex eine toxische Grenzkonzentration von 100 mg/l bestimmt. Das ist ein weiterer Hinweis darauf, dass für eine Anwendung der Zubereitung im Boden eine regionale Höchstkonzentration nicht überschritten werden sollte.

### Beispiel 6: Ermittlung ökotoxikologischer Grenzwerte mit der Perfusionszellkultur

Verwendete Zellen: FL, Herkunft: USA, ATCC, CCL 62, Katalognummer RIE 81, Lieferant: biometec GmbH
Verwendetes Medium: DMEM (Dulbecco's Modified Eagle's Medium) ohne Phenolrot mit 1000 mg/l Glucose und 110 mg/l Na-Pyruvat (Gibco), modifiziert mit 200 mM L-Glutamin, 1 M Hepes, 5U Penicillin/5mg Streptomycin/ml (Sigma) und 10 % FKS (Biochrom KG, Berlin)
Ausschaltung der Zellteilung: Zuerst wurde aus 2 mg Mitomycin C (Sigma), gelöst in 0,1 ml DMSO (Dimethylsulfoxid) und 1,9 ml PBS (phosphatgepufferte Salzlösung), eine Mitomycin C-Stammlösung hergestellt und in 50 µl-Aliquoten eingefroren. Zur Mitosehemmung wurde das Zellkulturmedium vom konfluent gewachsenen Zellrasen der FL-Zellkultur abgegossen, durch 5 ml Kulturmedium mit 50 µl Mitomycin-Stammlösung ersetzt und 2 h/37 °C inkubiert. Danach wurde dreimal mit PBS (ohne Ca⁺⁺' Mg⁺⁺, PAA) gewaschen, die Zellen mit Trypsin/EDTA (Sigma) abgelöst, die Zellzahl bestimmt und auf eine Konzentration von 4 x 10⁵/ml mit Zellkulturmedium eingestellt. Kultivierung auf den Zellträgern: Je 1 ml Zellsuspension wurde auf die Zellträger (13 mm runde, Thermanox-Plättchen (Nunc Inc, Naperville, IL USA) in einem Minusheet-Zellhaltersystem (Minucells & Minutissue Vertriebs GmbH, Bad Abbach) in einer Mikrokulturwanne eine 24-well-Zellkulturplatte (Nunc GmbH & Co Kg, Wiesbaden) pipettiert, 24 h kultiviert (37 °C, 5% CO₂, 97 % Luftfeuchte) und dann jeweils 6 Zellträger in eine Perfusionszellkammer aufrecht eingestellt.

Perfusionszellkultur: Zellkammern (Minucells & Minutissue, Typ 1301) wurden auf etwa 37 °C temperiert (Heizplatte: MEDAX, Typ 12501)
Fliessrate: 4,5 µl/min (Pumpe: Ismatec IPC-N 8)
Gas: Low-Gas Typ 110741-S (5 % Kohlenstoffdioxid, 20 % Sauerstoff, Rest Stickstoff), Air Liquide
Bestimmung der Stoffwechselparameter: Glukose wurde mit dem Beckmann Glucose analyzer 2 (Messintervalle: 12 h +/- 1 h) bestimmt.
Laktat: BIOSEN Autocal 5030 (Messsintervall 12 h +/- 1 h) Sauerstoffpartialdruck: analysio® -µ-Sauerstoffelektrode (Meßintervall 24 h +/- 1 h)
pH: SENTEK P 13 µ-pH-Einstabmesskette (Messintervall 12 h +/- 1 h) Zugabe einer Rhamnolipid-Ton-Kombination nach 200 h: Endkonzentration des Rhamnolipids im Medium: 50 mg/l

Ergebnisse: Nach Zugabe des Rhamnolipid-Tonmineral-Komplexes kommt es zu einer Verminderung des Zellstoffwechsels auf etwa 80 % der Kontrolle, wie in Fig. 9 zu sehen. Die Mischung von Biotensiden und Tonmineralen hat Einfluss auf den Glucosestoffwechsel in Perfusionszeilkulturen (Rhamnolipid-Konzentration 50 mg/l).

Während Tonminerale allein keinen Einfluss auf den Zellstoffwechsel haben - der Glucoseverbrauch liegt nach Zugabe der Tonminerale zwischen 102 und 104 % der Kontrolle - sind bei der Einwirkung der Biotenside in einer Konzentration von 50 mg/l Nährmedium bereits toxische Effekte zu erkennen, wenn es auch nicht zu einem Absterben der Zellen kommt.

Aus Sicherheitsgründen sollte daher eine regionale Höchstkonzentration von 20 bis 50 mg Biotensid/kg Bodenmasse nicht überschritten werden. Diese Forderung kann durch Beschränkung des Biotensidgehaltes in der erfindungsgemäßen Zubereitung sicher gewährleistet werden.

## Patentansprüche

1. Zubereitung zur Förderung des Pflanzenanbaus, umfassend zumindest ein Mixed-Layer-Tonmineral und zumindest ein Zeolithmineral,
**dadurch gekennzeichnet, dass**
die Zubereitung ferner zumindest ein Biotensid aufweist, das mit dem zumindest einen Mixed-Layer-Tonmineral und dem zumindest einen Zeolithmineral einen Geopolymer-Biotensid-Komplex bildet, der eine Netzwerk-Struktur aufweist, die durch das Zeolithmineral gebildet wird, das in einem Hydrogel des Mixed-Layer-Tonminerals dispergiert ist, wobei das zumindest eine Biotensid in die Netzwerk-Struktur eingelagert ist.

2. Zubereitung nach Anspruch 1
**dadurch gekennzeichnet, dass**
die Zubereitung ferner zumindest ein Pflanzenfördermittel und/oder mit zumindest einem Pflanzenfördermittel dotierte Pflanzenkohle umfasst, die bevorzugt eine mittlere Korngröße unter 2 mm aufweist,
wobei das zumindest eine Pflanzenfördermittel aus der Gruppe ausgewählt ist, die biologischen Volldünger, bevorzugt sterilisiertes Tiermehl, Biodünger, mineralischen Dünger, Pflanzenstärkungsmittel, Pflanzenschutzmittel, weitere Pflanzenwuchsstoffe, Bodenverbesserungsmittel, Huminsäurederivate und Chelatbildner, Polysaccharide natürlichen Ursprungs und Fungizide, bevorzugt Fungizide auf Chitinbasis, umfasst.

3. Zubereitung nach Anspruch 1 oder 2,
**dadurch gekennzeichnet, dass**
das zumindest eine Mixed-Layer-Tonmineral aus Smektit-Illit-Mixed-Layer-Tonmineral und Kaolinit-Chlorit-Mixed-Layer-Tonmineral ausgewählt ist, und
das zumindest eine Zeolithmineral aus Klinoptilolithen, Magnesiumaluminiumsilikaten und Feldspaten ausgewählt ist,
und wobei die Zubereitung bevorzugt zumindest ein weiteres Geopolymer aufweist, das aus der Gruppe ausgewählt ist, die Magnesiumsilikate, Magnesium-Lithium-Silikate, Magnesiumaluminiumsilikate, Opal-CT, Kreide, Quarz, Kieserit, Kieselgur aufweist.

4. Zubereitung nach zumindest einem der Ansprüche 1 bis 3,
**dadurch gekennzeichnet, dass**
als Biotensid ein anionisches Biotensid oder ein amphiphiler Biotensid-Alginatpolymer-Komplex eingesetzt wird, wobei das Biotensid bevorzugt ein Rhamnolipid ist, das aus einem Bakterium der Gattung *Pseu-domonas* gewonnen wird, und
ein Anteil des Biotensids in dem Geopolymer-Biotensid-Komplex so gewählt wird, dass eine Konzentration des in den Erdboden eingebrachten Biotensids nicht über 50 mg/kg Bodenmasse, vorzugsweise nicht über 20 mg/kg Bodenmasse liegt.

5. Zubereitung nach zumindest einem der Ansprüche 1 bis 4,
**dadurch gekennzeichnet, dass**
die Zubereitung ein Härtegradeinstellungsmittel aufweist, das bevorzugt Kieserit ist, das in Abhängigkeit eines gewünschten Härtegrads in einem Gewichtsverhältnis Härtegradeinstellungsmittel zu dem Geopolymer-Biotensid-Komplex von 1:1 bis 1:10 vorliegt.

6. Verwendung der Zubereitung nach zumindest einem der Ansprüche 1 bis 5 zur Herstellung eines Granulats zur Ausbringung auf einem Pflanzboden und/oder zur Beschichtung von Pflanzensamen.

7. Verfahren zur Herstellung einer Zubereitung zur Förderung des Pflanzenanbaus, umfassend zumindest ein Mixed-Layer-Tonmineral und zumindest ein Zeolithmineral,
umfassend die Schritte:
- Quellenlassen des zumindest einen Mixed-Layer-Tonminerals in einem Quellmittel,
- Dispergieren des gequollenen Mixed-Layer-Tonminerals in einem flüssigen Medium zu einer homogenen Suspension und Zusetzen zumindest eines Biotensids,
- Dispergieren des zumindest einen Zeolithminerals in der Suspension, wobei Geopolymer-Biotensid-Komplexe durch sterische Stabilisierung des Zeolithminerals mit dem dispergierten Mixed-Layer-Tonmineral gebildet werden.

8. Verfahren nach Anspruch 7,
umfassend die Schritte
- Konzentrieren der Suspension vor der Zugabe des zumindest einen Biotensids oder nach der Dispergierung des zumindest einen Zeolithminerals durch Zugeben zumindest eines Pflanzenfördermittels oder von weiteren Mineralkomponenten in fester Form, und
- Erhalten eines Dickschlamms, der die Geopolymer-Biotensid-Komplexe enthält.

9. Verfahren nach Anspruch 8,
umfassend die Schritte
- Zugeben zumindest eines weiteren Pflanzenfördermittels und/oder einer mit dem zumindest einen weiteren Pflanzenfördermittel dotierten Pflanzenkohle zu der Suspension nach der Dispergierung des zumindest einen Zeolithminerals oder zu dem Dickschlamm,
wobei die mit dem zumindest einen weiteren Pflanzenfördermittel dotierte Pflanzenkohle durch gemeinsames Vermahlen des zumindest einen weiteren Pflanzenfördermittels mit der Pflanzenkohle, bevorzugt in Korngrößen unter 2 mm, erhalten wird.

10. Verfahren nach zumindest einem der Ansprüche 7 bis 9,
wobei als Biotensid ein amphiphiler Biotensid-Alginatpolymer-Komplex eingesetzt wird, dessen Herstellung die Schritte umfasst:
- Herstellen eines sterilen wässrigen Nährmediums mit zumindest einer assimilierbaren Kohlenstoffquelle, zumindest einer assimilierbaren Stickstoffquelle und an sich bekannten Nährsalze in geeigneten Konzentrationen,
- Beimpfen des Nährmediums mit einem Bakterium der Gattung *Pseudomonas,*
- Züchten der Bakterien der Gattung *Pseudomonas* bei einem pH-Wert im Bereich von 6,5 bis 7,5 und bei einer Temperatur im Bereich von 25 bis 30 °C aerob in bewegter Submers-Kultur,
- Abtrennen der Zellen des Bakteriums der Gattung *Pseudomonas* von dem wässrigen Medium und
- Abtrennen des Biotensid-Alginatpolymer-Komplexes aus dem zellfreien wässrigen Medium.

11. Verfahren zur Herstellung von Granulat zur Förderung des Pflanzenanbaus oder zur Herstellung von beschichteten Samen unter Verwendung einer nach zumindest einem der Ansprüche 7 bis 10 hergestellten Zubereitung,
umfassend die Schritte
- Zugeben von Wasser oder einer wässrigen Lösung zumindest eines Pflanzenfördermittels zu dem Dickschlamm, und zur Herstellung von beschichteten Samen Zugeben der Samen,
- Granulieren des Dickschlamms oder Beschichten der Samen mittels des Dickschlamms,
- Trocknen und Sieben des erzeugten Granulats oder der beschichteten Samen.

12. Verfahren nach Anspruch 11,
umfassend den Schritt:
- Zugeben eines Härtegradeinstellungsmittels zu dem Dickschlamm in einer Menge, die von einem für die Granalien oder die Samenbeschichtung vorgesehenen Härtegrad abhängt.

13. Verfahren nach Anspruch 11 oder 12,
umfassend den Schritt:
- Auftragen zumindest eines Pflanzenfördermittels oder einer mit zumindest einem Pflanzenfördermittel dotierten Pflanzenkohle auf die Granalien oder Samenbeschichtung vor dem Trocknen.

14. Verfahren nach zumindest einem der Ansprüche 11 bis 13, umfassend den Schritt:
- Rückführen eines beim Sieben erhaltenen Siebrückstands zum Konzentrieren der Suspension nach Anspruch 8.

15. Verfahren zur Herstellung von Granulat zur Förderung des Pflanzenanbaus oder zur Herstellung von beschichteten Samen unter Verwendung einer nach zumindest einem der Ansprüche 7 bis 10 hergestellten Zubereitung,
umfassend die Schritte
- Zugeben von Wasser oder einer wässrigen Lösung zumindest eines Pflanzenfördermittels und Zugeben eines Geopolymergemischs oder der zu beschichtenden Samen zu der Suspension, die nach der Dispergierung des zumindest einen Zeolithminerals erhalten wird,
- Granulieren des Geopolymergemischs mit der Zeolith-Suspension oder Beschichten der Samen mit der Zeolith-Suspension,
- Trocknen und Sieben des Granulats oder der beschichteten Samen mit oder ohne Rückführen eines beim Sieben erhaltenen Siebrückstands zum Konzentrieren der Suspension nach Anspruch 8.

16. Verfahren nach Anspruch 15,
umfassend den Schritt
- Zufügen einer Zubereitung nach zumindest einem der Ansprüche 1 bis 6, herstellbar nach zumindest einem der Ansprüche 7 bis 10, zu dem noch feuchten Granulat oder den noch feuchten beschichteten Samen und/oder Zugeben eines Härtegradeinstellungsmittels vor dem Trocknen und Fortsetzten des Granulierens.
